# EUROPÄISCHE PATENTSCHRIFT

(11) **EP 2 654 986 B1**
(45) Veröffentlichungstag und Bekanntmachung des Hinweises auf die Patenterteilung: **27.01.2021**
(21) Anmeldenummer: 11796999.8
(22) Anmeldetag: 13.12.2011
(51) Int. Cl.: B21H 7/18, B23B 27/24, C23C 4/02, B23P 9/02

(54) **BEARBEITUNGSVERFAHREN UND BEARBEITUNGSWERKZEUG ZUM BEARBEITEN EINER GEKRÜMMTEN WERKSTÜCKOBERFLÄCHE**
MACHINING METHOD AND MACHINING TOOL FOR MACHINING A CURVED WORKPIECE SURFACE
PROCÉDÉ D'USINAGE ET OUTIL D'USINAGE POUR L'USINAGE DE SURFACES DE PIÈCES COURBES

(30) Priorität: 21.12.2010 DE 102010063704; 25.07.2011 DE 102011079757
(43) Veröffentlichungstag der Anmeldung: 30.10.2013
(73) Patentinhaber: Elgan-Diamantwerkzeuge GmbH & Co. KG, 72622 Nürtingen (DE)
(72) Erfinder: SCHMID, Josef, 72582 Grabenstetten (DE); WITT, Thomas, 73240 Wendlingen (DE); XAVIER, Fabio-Antonio, 72622 Nürtingen (DE); ZELLER, Steffen, 72669 Unterensingen (DE)
(74) Vertreter: Patentanwälte Ruff, Wilhelm, Beier, Dauster & Partner mbB
(86) Internationale Anmeldenummer: PCT/EP2011/072647
(87) Internationale Veröffentlichungsnummer: WO 2012/084612

(56) Entgegenhaltungen:
- EP-A1- 0 415 215
- EP-A1- 1 405 689
- EP-A1- 1 870 195
- WO-A1-2005/084857
- DE-A1- 19 802 842
- DE-A1-102008 024 313
- US-A1- 2007 010 173

## Beschreibung

### HINTERGRUND

Die Erfindung betrifft ein Bearbeitungsverfahren zum Bearbeiten einer gekrümmten Werkstückoberfläche eines Werkstücks, insbesondere zum Bearbeiten der Innenfläche einer Bohrung in einem Werkstück, gemäß dem Oberbegriff von Anspruch 1 sowie ein bei der Durchführung des Verfahrens verwendbares Bearbeitungswerkzeug zum Bearbeiten einer gekrümmten Werkstückoberfläche eines Werkstücks gemäß dem Oberbegriff von Anspruch 6.

Ausführungsformen der Erfindung können unter anderem bei der Herstellung von tribologisch beanspruchten, rotationssymmetrischen oder auf andere Weise gekrümmten Gleitoberflächen an Werkstücken genutzt werden, vorzugsweise für den Motorenbau. Ein besonders bevorzugtes Anwendungsgebiet liegt bei der Herstellung von Zylinderlaufflächen in Verbrennungsmotoren, d.h. bei der Bearbeitung von Innenflächen von Zylinderbohrungen in einem Motorblock oder in einer in einen Motorblock einzubauenden Zylinderhülse.

Zur qualitätsbestimmenden Endbearbeitung von Zylinderlaufflächen werden in der Regel Honverfahren eingesetzt, um die extrem hohen Anforderungen bezüglich Maß- und Formtoleranzen sowie hinsichtlich der gewünschten Oberflächenstruktur zu erzielen. Das Honen ist ein Zerspanungsverfahren mit geometrisch unbestimmten Schneiden, bei dem vielschneidige Honwerkzeuge eine aus zwei Komponenten bestehende Schnittbewegung ausführen, die zu einer charakteristischen Oberflächenstruktur der bearbeiteten Werkstückoberfläche mit überkreuzten Bearbeitungsspuren führt.

Bei manchen Werkstücken wird die Gleitoberfläche direkt am Grundwerkstoff des Werkstücks erzeugt. Beispielsweise können bei Motorblöcken (Zylinderkurbelgehäusen) aus Grauguss die Zylinderlaufflächen häufig direkt auf dem Graugussmaterial erzeugt werden. Ist dagegen der für das Werkstück verwendete Werkstoff aufgrund seiner Materialeigenschaften nicht dazu geeignet, nach einer Feinbearbeitung der Werkstückoberfläche als tribologisch beanspruchbare Oberfläche zu dienen, so kann der Grundwerkstoff mit einer Beschichtung versehen werden, deren Oberfläche dann gegebenenfalls mechanisch nachbearbeitet wird, um als Gleitoberfläche zu dienen. Beispielsweise ist es bekannt, Zylinderbohrungen in Motorblöcken aus Aluminiumwerkstoff durch thermisches Spritzen mit einer Beschichtung aus einem eisenhaltigen Beschichtungsmaterial zu versehen. Die Oberfläche der Spritzschicht wird normalerweise nach dem Beschichtungsvorgang noch mechanisch nachbearbeitet. Beim thermischen Spritzen werden Zusatzwerkstoffe, die sogenannten Spritzzusätze, innerhalb oder außerhalb eines Spritzbrenners abgeschmolzen, angeschmolzen oder aufgeschmolzen, in einem Gasstrom in Form von Spritzpartikeln beschleunigt und auf die Oberfläche des zu beschichtenden Werkstücks geschleudert. Die Werkstückoberfläche wird dabei in der Regel nicht angeschmolzen und nur in geringem Maße thermisch belastet. Die erwärmten Spritzpartikel treffen auf die Werkstückoberfläche auf und verbinden sich mit dieser. Eine Schichtbildung findet statt, da die Spritzpartikel beim Auftreffen auf die Werkstückoberfläche prozess- und materialabhängig mehr oder minder abflachen, vorrangig durch mechanische Verklammerung haften bleiben und lagenweise die als Spritzschicht bezeichnete Beschichtung aufbauen.

Die Haftfestigkeit der Beschichtung am Grundwerkstoff des Werkstücks wird maßgeblich durch die Vorbearbeitung der Werkstückoberfläche direkt vor dem Beschichtungsprozess bestimmt. Ausreichende Haftfestigkeit kann durch Aufrauen der Werkstückoberfläche vor dem Beschichten erreicht werden. Hierzu sind schon unterschiedliche Verfahren vorgeschlagen worden.

Der Artikel "Prozesskette zur Herstellung thermisch gespritzter Zylinderbohrungen" von G. Flores, A. Schwenk und C. Schnell in: VDI-Berichte Nr. 2109, 2010 beschreibt Verfahren zur Herstellung von thermisch gespritzten Zylinderbohrungen. Das Aufrauen der Werkstückoberfläche vor dem Beschichten erfolgt dabei durch eine Variante des Feinbohrens, bei dem Profilhinterschnitte in die Werkstückoberfläche eingebracht werden. Dadurch soll die nachfolgend aufgebrachte thermische Spritzschicht eine hohe Haftfestigkeit an der Zylinderwandung erhalten.

In der DE 196 14 328 A1 werden Verfahren beschrieben, bei denen Werkstückoberflächen zur Vorbereitung der Beschichtung mittels Laserstrahlen in einem regelmäßigen Muster strukturiert werden.

Aus der EP 1 141 438 B1 ist es bekannt, die Zylinderbohrungen in einem Zylinderkurbelgehäuse vor dem Beschichten mittels Korund- bzw. Sandstrahlen aufzurauen.

In der EP 0 607 779 B1 (DE 694 23 373 T2) wird darauf hingewiesen, dass das Sandstrahlen ein zusätzlicher Arbeitsschritt ist, der die Beschichtungskosten erhöht. In manchen Fällen, wie beispielsweise bei Zylinderbohrungen von Verbrennungsmotoren, bestehe zudem die Gefahr, dass Sandteilchen in der bestrahlten Werkstückoberfläche eingebettet zurückbleiben und später zu Schäden am Motor bis hin zur Zerstörung führen können.

In der DE 10 2004 038 177 A1 werden Verfahren zum Vorbereiten einer gegossenen Zylinderbohrung zum thermischen Beschichten beschrieben, bei denen die Oberfläche der Zylinderbohrung mittels eines Strahls, bevorzugt mittels eines Feststoffpartikel enthaltenden Flüssigkeitsstrahls und/oder eines Wasserstrahls aufgeraut wird, wobei beim Aufrauen gleichzeitig Material der Zylinderbohrung in einer gewissen Dicke abgetragen wird.

Die WO 2005/084857 A1, welche die Basis für den Oberbegriff des Anspruchs 6 bildet, offenbart ein Verfahren und eine Vorrichtung zur Strukturierung einer Bohrungsinnenfläche. Dabei wird ein rotierendes Werkzeug mit einer oder mehreren Rollen verwendet, an deren Umfang viele Vorsprünge angebracht sind, die sich beim Abrollen in die Bohrungsinnenfläche eindrücken, um diskrete Taschen an der Oberfläche zu erzeugen. Die Vorrichtung dient der Endbearbeitung der Oberfläche, um durch die Taschen gebildete Ölhaltereservoirs an der Bohrungsinnenfläche zu schaffen.

Die DE 10 2008 024 313 A1, welche den nächstliegenden Stand der Technik bezüglich des Verfahrens nach Anspruch 1 darstellt, offenbart ein Verfahren zur Vorkonditionierung einer nach der Vorkonditionierung zu beschichtenden Oberfläche, bei dem Hinterschnitte und/oder Vorformen der Hinterschnitte spanend und/oder prägend in die Oberfläche eingebracht werden. Bei den Vorformen wird zur Erzeugung der Hinterschnitte mindestens ein weiterer, spanloser Verfahrensschritt durchgeführt. Die Hinterschnitte und/oder Vorformen der Hinterschnitte sollen spanend und/oder prägend, beispielsweise mittels Drehen und/oder Fräsen und/oder einer Vorrichtung mit einer gehärteten Mikrotopografie auf einer der Bearbeitung dienenden Mantelfläche in die Oberfläche eingebracht werden.

### AUFGABE UND LÖSUNG

Es ist eine Aufgabe der Erfindung, ein Bearbeitungsverfahren zum mechanischen Bearbeiten einer gekrümmten Werkstückoberfläche eines Werkstücks bereitzustellen, das eine effiziente und kostengünstige Konditionierung von gekrümmten Werkstückoberflächen beispielsweise zur Vorbereitung für eine nachfolgende Beschichtung mittels thermischen Spritzens erlaubt. Es ist eine weitere Aufgabe der Erfindung, ein zur Durchführung des Verfahrens geeignetes Bearbeitungswerkzeug bereitzustellen. Weiterhin sollen Werkstücke mit verbesserten Gebrauchseigenschaften bei der bestimmungsgemäßen Nutzung bereitgestellt werden.

Zur Lösung dieser und anderer Aufgaben stellt die Erfindung ein Bearbeitungsverfahren mit den Merkmalen von Anspruch 1 bereit. Weiterhin werden ein Bearbeitungswerkzeug mit den Merkmalen von Anspruch 6 bereitgestellt.

Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das Bearbeitungsverfahren ist gekennzeichnet durch eine Rollprägeoperation, bei der mindestens ein Wälzelement eines Bearbeitungswerkzeugs an einen zu bearbeiteten Abschnitt der gekrümmten Werkstückoberfläche unter einem vorgebbaren Anpressdruck abgerollt wird. Eine Außenfläche des Wälzelementes weist dabei in mindestens einem für einen Abrollkontakt mit der Werkstückoberfläche bestimmten zylindrischen Arbeitsabschnitt eine raue Oberflächenstruktur auf. Der Anpressdruck wird so eingestellt, dass beim Abrollen des Wälzelementes auf der gekrümmten Werkstückoberfläche durch lokales Umformen von Werkstückmaterial im Bereich der Werkstückoberfläche eine raue Rollprägestruktur erzeugt wird. Die Ausbildung bzw. die Ausprägung der Rollprägestruktur ist dabei unter anderem vom Anpressdruck sowie von der Rauhigkeit bzw. der Struktur des Arbeitsabschnitts abhängig. Das Werkstück besteht hierzu zumindest im Bereich der zu bearbeitenden Werkstückoberfläche aus einem plastisch deformierbaren Werkstückmaterial, beispielsweise aus einem metallischen Werkstoff. Bei der Rollprägeoperation kommt es zu einer plastischen Verformung einer an die Werkstückoberfläche angrenzenden Randschicht. Die "raue Oberflächenstruktur" des Arbeitsabschnittes des Wälzelements ist eine Oberflächenstruktur mit Erhöhungen und gegenüber den Erhöhungen tiefer liegenden Vertiefungen.

Gemäß der beanspruchten Erfindung ist die räumliche Verteilung der Erhöhungen und Vertiefungen unregelmäßig. Die durch Umformen erzeugte raue Rollprägestruktur kann dementsprechend ebenfalls aus Erhöhungen und gegenüber den Erhöhungen zurückgesetzten Vertiefungen bestehen, wobei beim Rollprägen normalerweise eine Erhöhung am Arbeitsabschnitt des Wälzelementes durch Materialverdrängung eine Vertiefung in der Rollprägestruktur erzeugt.

Als "raue Oberflächenstruktur" wird hier eine Oberflächenstruktur bezeichnet, bei der Erhöhungen und/oder Vertiefungen gegenüber einer mathematisch glatten Bezugsfläche um mehrere Mikrometer vorspringen bzw. zurücktreten. Es handelt sich dabei um eine gewollte und bewusst erzeugte Rauheit im Gegensatz zu unvermeidlichen Restrauheiten, die beispielsweise an nominell glatten technischen Oberflächen durch Polieren erzeugt werden können.

Gemäß der beanspruchten Erfindung wird durch die Rollprägeoperation an der Werkstückoberfläche eine Rollprägestruktur mit einer mittleren Rautiefe R_{Z} von mehr als 10 Mikrometern erzeugt, wobei die mittlere Rautiefe im Bereich zwischen R_{Z} = 30 µm und R_{Z} = 100 µm liegt. Mittlere Rautiefen in diesem Bereich können insbesondere dann vorteilhaft sein, wenn - wie bei der dem erfindungsgemäßen Verfahren - eine nachfolgende Beschichtung vorgesehen ist.

Beim beanspruchten Verfahren is vorgesehen, dass die Rollprägestruktur vor der Beschichtung eine mittlere Rautiefe zwischen R_{Z} = 30 µm und R_{Z} = 100 µm aufweist. Wird die untere Grenze deutlich unterschritten, so ist bei manchen Materialkombinationen die Haftfestigkeit der Beschichtung im kritischen Bereich nicht zuverlässig genug gegeben. Wird dagegen die Obergrenze deutlich überschritten, wird in der Regel mehr Beschichtungsmaterial als eigentlich für die Beschichtung notwendig benötigt, um die stark aufgeraute Struktur zu füllen. Der Beschichtungsprozess kann dadurch unnötig verlängert werden. Mittlere Rautiefen im beanspruchten Bereich stellen daher einen guten Kompromiss zwischen zuverlässiger Haftfestigkeit und Effizienz bei der Schichtherstellung dar.

Das Rollprägen ist prinzipiell ein weitestgehend spanloses Verfahren, da die raue Rollprägestruktur im Wesentlichen nicht durch Materialabtrag erzeugt wird, sondern durch Materialumformung bzw. Materialverdrängung und Materialumverteilung ohne wesentlichen Materialabtrag. Im Vergleich zu spanenden Bearbeitungsverfahren mit Materialabtrag ergeben sich in der Regel wesentlich höhere Werkzeugstandzeiten, wodurch die Fertigungskosten niedrig gehalten werden können.

Bei manchen Verfahrensvarianten kann ohne Unterstützung flüssiger Fertigungshilfsstoffe, wie z.B. Kühlschmierstoff, gearbeitet werden, also in Trockenbearbeitung. Das erlaubt eine besonders kostengünstige Oberflächenstrukturierung. Bei Bedarf kann jedoch auch nass gearbeitet werden, beispielsweise um die Haftung zwischen der rauen Werkzeugoberfläche und Werkstückoberfläche herabzusetzen.

Der Anpressdruck kann gegebenenfalls so hoch sein, dass es in der oberflächennahen Randschicht zu einer Kaltverfestigung des Werkstückmaterials kommt. Der Begriff Kaltverfestigung bezeichnet hierbei eine Festigkeitssteigerung des Werkstückmaterials, die bei einer plastischen Verformung des Materials in weitgehend kaltem Zustand erreicht werden kann. Diese oberflächennahe Festigkeitssteigerung kann insbesondere bei relativ weichen metallischen Werkstoffen, wie Leichtmetallwerkstoffen auf Basis von Aluminium oder Magnesium, günstig sein.

Bei dem beanspruchten Verfahren wird nach dem Rollprägeschritt auf die Werkstückoberfläche eine Beschichtung aufgebracht. Die Beschichtung kann unmittelbar auf die durch den Rollprägeschritt erzeugte raue Rollprägestruktur aufgebracht werden, insbesondere wenn diese im Trockenverfahren erzeugt wurde.

Die Beschichtung wird vorzugsweise durch ein thermisches Spritzverfahren, wie z. B. das Plasmaspritzen oder das Hochgeschwindigkeitsflammspritzverfahren (HVOF-Verfahren), aufgebracht. Abhängig vom Anwendungsfall kann die Beschichtung z.B. aus einem keramischen Beschichtungsmaterial, einem metallischen Beschichtungsmaterial oder einem Metallmatrix-Verbundwerkstoff (MMC), insbesondere einem keramisch-metallischen Schichtmaterial, bestehen.

Die Rollprägeoperation kann der letzte Bearbeitungsschritt an der Werkstückoberfläche sein. In manchen Fällen können sich ein oder mehrere weitere Behandlungsschritte bzw. Bearbeitungsschritte anschließen.

Bei manchen Verfahrensvarianten wird während und/oder nach der Rollprägeoperation eine Reinigung der mit einer Rollprägestruktur versehenen Werkstückoberfläche durchgeführt. Das Rollprägen ist prinzipiell ein spanloses Umformverfahren, bei dem ein Materialabtrag weder beabsichtigt ist noch in größerem Umfang vorkommt. Dennoch kann es bei manchen Werkstoffen vorkommen, dass beim Rollprägen an der Werkstückoberfläche nicht oder nur schwach mit der Werkstoffoberfläche verbundene Werkstoffpartikel, beispielsweise in Form flacher Blättchen oder Flitter, entstehen, die die Funktion der Rollprägestruktur beeinträchtigen könnten. Daher wird bei manchen Verfahrensvarianten die mit der Rollprägestruktur versehene Werkstückoberfläche nach dem Rollprägen gereinigt, um durch das Rollprägen erzeugte nicht oder nur schwach gebundene Werkstoffpartikel zu beseitigen. Die Reinigung kann auch teilweise oder ausschließlich während der Rollprägeoperation, also gleichzeitig mit der Rollprägeoperation, durchgeführt werden. Die Reinigung ist formerhaltend, d.h. die Form der Rollprägestruktur wird dadurch praktisch nicht verändert.

Es sind trockene oder nasse Reinigungsverfahren möglich. Bei manchen Verfahrensvarianten wird die Rollprägestruktur mit Hilfe relativ weicher, gegebenenfalls rotierender Bürsten gereinigt. Die Borsten der Bürsten sind dabei nicht-abrasiv und so weich, dass die Gestalt der Rollprägestruktur unverändert bleibt. Alternativ oder zusätzlich kann die mit einer Rollprägestruktur versehene Werkstückoberfläche mit Hilfe von Druckluft oder einem anderen Druckgas pneumatisch gereinigt werden. Das Druckgas kann extern und/oder mittels geeigneter Druckgaskanäle durch das Bearbeitungswerkzeug hindurch und aus Auslassöffnungen hinaus auf die Rollprägestruktur geleitet werden. Alternativ oder zusätzlich kann während und/oder nach der Rollprägeoperation eine Absaugung von Spänen und anderen Bearbeitungsrückständen der Rollprägeoperation vorgesehen sein, wobei vorzugsweise zusätzlich zur Absaugung die Werksstückoberfläche freigeblasen wird.

Auch eine Nassreinigung mit Hilfe einer Reinigungsflüssigkeit ist möglich. Bei der Vorbereitung für eine nachfolgende Beschichtung kann beispielsweise eine fettlösende Reinigungsflüssigkeit (Alkohol, Aceton o.dgl) eingesetzt werden. Auch eine Reinigung mit Wasser ist möglich.

Bei nicht zum beanspruchten Verfahren gehörenden Varianten wird die mit einer Rollprägestruktur versehene Werkstückoberfläche in ihrer Form noch leicht verändert, um durch Nachbearbeitung eine modifizierte Rollprägestruktur zu schaffen. Manche Verfahrensvarianten sehen hierzu eine Beseitigung von Spitzen im Bereich von Erhebungen der Rollprägestruktur zur Erzeugung einer Plateaustruktur mit abgeflachten Erhebungen und dazwischenliegenden Vertiefungen an der Werkstückoberfläche vor.

Bei nicht zum beanspruchten Verfahren gehörenden Varianten werden die Spitzen im Bereich von Erhebungen durch eine materialabtragende Feinbearbeitung beseitigt. Hierzu wird normalerweise eine Honoperation mit relativ feinkörnigem Schneidmittel durchgeführt, um nach Art des Plateauhonens eine modifizierte Rollprägestruktur zu schaffen, die abgeflachte Erhebungen mit plateauartigen flachen Oberflächen hat, welche eine feine Riefenstruktur aufweisen. Dazwischen liegen die durch die Rollprägeoperation erzeugten Vertiefungen. Bei derartigen Verfahrensvarianten kann das Rollprägen das herkömmliche Basishonen (Honen mit vergleichsweise grobem Schneidmittel) ersetzen. Im Unterschied zu herkömmlichen Werkstückoberflächen, die in einem mehrstufigen Bearbeitungsprozess zunächst mit einer Basishonung und danach mit einer Plateauhonung bearbeitet werden, hat ein Verfahren mit Rollprägeschritt und nachfolgender Plateauhonung u.a. den Vorteil, dass der oberflächennahe Bereich beim Rollprägeschritt noch zusätzlich durch Kaltverfestigung eine erhöhte Festigkeit erhalten kann. Zwar kann auch beim Basishonen eine Kaltverfestigung eintreten, aber die Zone der Kaltverfestigung reicht beim Rollprägen tiefer als beim Basishonen, da beim Basishonen eine eventuelle Kaltverfestigungsschicht zum großen Teil gleich wieder abgetragen wird.

Die materialabtragende Beseitigung von Spitzen kann der letzte Bearbeitungsschritt einer mehrstufigen Bearbeitung der Werkstückoberfläche sein, so dass die Werkstückoberfläche danach für den bestimmungsgemäßen Gebrauch fertigt gestellt ist. Es können sich jedoch auch weitere Bearbeitungsschritte anschließen.

Bei nicht zum beanspruchten Verfahren gehörenden Varianten werden die Spitzen im Bereich von Erhebungen der Rollprägestruktur durch Umformen beseitigt, indem beispielsweise Wälzelemente mit glatter Außenfläche unter geeignetem Anpressdruck auf der Rollprägestruktur abgerollt werden. Dadurch könnten die Spitzen ohne Materialabtrag plattgedrückt werden. Bei dieser materialumformenden Nachbearbeitung können an den Seiten der dadurch entstehenden Plateaus lateral vorstehende Materialnasen entstehen. Derartige Strukturen mit Hinterschnitt sind besonders für eine nachfolgende Beschichtung geeignet, da sich das in die Vertiefungen gelangende Beschichtungsmaterial im Bereich der lateralen Nasen formschlüssig mit der Werkstückoberfläche verhaken kann, wodurch eine besonders gute Schichthaftung auf der Werkstückoberfläche erreicht werden kann.

Es gibt verschiedene Möglichkeiten der Realisierung des Bearbeitungsverfahrens.

In einer Ausführungsform des Bearbeitungsverfahrens wird das Abrollen des mindestens einen Wälzelements an dem zu bearbeitenden Abschnitt der gekrümmten Werkstückoberfläche dadurch erreicht, dass das Bearbeitungswerkzeug in einem vordefinierten Abstand zur Werkstückoberfläche entlang einer vordefinierten Bahn geführt wird. Der Bahnverlauf des Bearbeitungswerkzeugs wird dabei so gewählt, dass das Wälzelement mit dem erforderlichen bzw. gewünschten Anpressdruck auf der zu bearbeitenden Werkstückoberfläche abrollt. Das Bearbeitungswerkzeug kann hierzu z.B. an eine Arbeitsspindel eines Bearbeitungszentrums, insbesondere eines 3-, 4- oder 5-Achs-CNC-Bearbeitungszentrums, angekoppelt werden. Mittels einer Steuerung des Bearbeitungszentrums kann der Bahnverlauf in Abhängigkeit von der Geometrie der der Werkstückoberfläche, insbesondere abhängig von deren Krümmung, gesteuert bzw. geregelt werden.

Bei einer Ausführungsform des Bearbeitungsverfahrens, das insbesondere zur Bearbeitung der Innenflächen von zylindrischen Bohrungen genutzt werden kann, wird ein um seine Werkzeugachse drehangetriebenes Rotationswerkzeug als Bearbeitungswerkzeug mit mindestens einem exzentrisch zur Werkzeugachse angeordneten Wälzelement verwendet. Durch das Drehen des Bearbeitungswerkzeugs rollt die Außenfläche des Wälzelementes auf der zu bearbeitenden Werkstückoberfläche ab und die Werkzeugachse kann während der Bearbeitung ortsfest sein. Ein solches Bearbeitungsverfahren kann bei entsprechender Ausgestaltung einer Kupplungseinrichtung des Bearbeitungswerkzeuges beispielsweise auf einer Honmaschine durchgeführt werden, indem das Bearbeitungswerkzeug an einer Arbeitsspindel der Honmaschine angeordnet wird, ähnlich wie ein Honwerkzeug zum Innenrundhonen. Das Bearbeitungswerkzeug kann ggf. die zu bearbeitende Bohrung im wesentlichen ausfüllen, so dass der wirksame Bearbeitungswerkzeug-Außendurchmesser nahezu dem Innendurchmesser der Bohrung entspricht.

Die Erfindung betrifft auch ein zur Durchführung des Verfahrens geeignetes Bearbeitungswerkzeug zum Bearbeiten einer gekrümmten Werkstückoberfläche eines Werkstücks. Das Bearbeitungswerkzeug hat einen Werkzeugkörper, der eine Werkzeugachse definiert. Das Bearbeitungswerkzeug hat mindestens ein durch den Werkzeugkörper getragenes Wälzelement, welches um Wälzelementachse drehbar ist und eine Außenfläche aufweist. Das Wälzelement kann sich bei der Bearbeitung um seine Wälzelementachse drehen. Die Außenfläche des Wälzelementes hat in mindestens einem für einen Abrollkontakt mit der Werkstückoberfläche bestimmten zylindrischen Arbeitsabschnitt eine raue Oberflächenstruktur. Der Arbeitsabschnitt hat die oben erwähnten Erhöhungen und Vertiefungen, um an der bearbeiteten Werkstückoberfläche durch Rollprägen die raue Rollprägestruktur zu erzeugen.

Das Bearbeitungswerkzeug kann als Rotationswerkzeug ausgelegt sein, das beim bestimmungsgemäßen Gebrauch des Bearbeitungswerkzeuges drehend angetrieben wird, so dass sich der Werkzeugkörper bzw. das gesamte Bearbeitungswerkzeug um die Werkzeugachse dreht. Wenn dabei ein Wälzelement eine außerhalb der Werkzeugachse liegende Wälzelementachse hat, kann dessen Außenfläche bzw. ein Abschnitt davon an der bearbeiteten Innenfläche abrollen und die angestrebte Struktur erzeugt werden.

Ein Wälzelement hat normalerweise einen drehbar gelagerten Wälzelementkörper, der beispielsweise aus einem metallischen Werkstoff geeigneter Härte, aus einem keramischen Werkstoff oder aus einem Metall-Keramik-Verbundwerkstoff bestehen kann. Die raue Oberflächenstruktur kann direkt in eine rotationssymmetrische Außenfläche des Wälzelementkörpers eingebracht sein. Die raue Oberflächenstruktur kann beispielsweise durch Laserbearbeitung oder durch einen Ätzprozess erzeugt werden. Beispielsweise kann die Außenfläche einer metallischen Rolle chemisch oder elektrochemisch oder mechanisch (z.B. durch Sandstrahlen) so geätzt werden, dass Vertiefungen erzeugt werden und dazwischen Erhebungen hervorstehen. Auf die dadurch erzeugte raue Oberfläche kann zur Verbesserung der Verschleißbeständigkeit eine dünne Hartstoffschicht z.B. mittels eines PVD (physical vapor deposition)-Verfahrens oder eines CVD (chemical vapor deposition) - Verfahrens aufgebracht werden.

Der Wälzelementkörper kann auch nach Art eines Schleifsteins vollständig aus einem harten Material mit gebundenen Hartstoffkörnern bestehen, um eine raue Außenfläche zu bilden.

Bei dem Bearbeitungswerkzeug gemäß der beanspruchten Erfindung hat das Wälzelement einen Wälzelementkörper, der im Arbeitsabschnitt eine Beschichtung mit einer rauen Oberflächenstruktur trägt. Diese Konstruktion zeichnet sich u.a. durch einfache Herstellbarkeit und große Flexibilität bei der Auslegung der Geometrie und anderer Prägeeigenschaften der rauen Oberflächenstruktur aus. Der Wälzelementkörper kann ein einfaches Drehteil aus einem metallischen Werkstoff sein, während die für den Rollprägeschritt erforderlichen Härte der rauen Oberflächenstruktur und ihre Geometrie durch die Beschichtung bestimmt sein kann.

Die Beschichtung hat eine Vielzahl von in einer Bindung gebundenen Hartstoffkörnern, die an der Außenseite aus der Bindung herausragen und dadurch die Erhöhungen der rauen Oberflächenstruktur bilden. Die mittlere Korngröße der Hartstoffkörner liegt bei der beanspruchten Erfindung im Bereich von ca. 30 µm bis ca. 250 µm. Dadurch kann beispielsweise bei der Bearbeitung von Werkstücken aus Aluminium bzw. einer Aluminiumlegierung an der Werkstückoberfläche gemittelte Rautiefen zwischen ca. 10 µm und ca. 100 µm erzeugt werden. Prägestrukturen mit diesen Rauheitskennwerten sind in vielen Fällen für eine nachfolgende Beschichtung besonders geeignet.

Die Hartstoffkörner können beispielsweise aus Diamant, Korund, kubischem Bornitrid oder anderen Hartstoffen bestehen, deren Härte vorzugsweise deutlich größer als die Härte von Stahl ist. Die Bindung ist vorzugsweise galvanisch aufgebracht, um eine gute Haftung auf einem metallischen Wälzelementkörper und gleichzeitig eine hohe Verschleißfestigkeit gegen Ausbrechen von Hartstoffkörnern aus der Bindung zu erreichen.

Manche Ausführungsformen eines Bearbeitungswerkzeugs, das insbesondere zur Bearbeitung der Innenfläche einer zylindrischen Bohrung verwendet werden kann, weisen einen Außendurchmesser auf, der im wesentlichen dem Innendurchmesser der zu bearbeitenden Bohrung entspricht, so dass das Bearbeitungswerkzeug die Bohrung nahezu ausfüllt. Bevorzugt ist das Bearbeitungswerkzeug als Rotationswerkzeug ausgebildet und kann zum bestimmungsgemäßen Gebrauch drehend um seine Werkzeugachse angetrieben werden. Das Bearbeitungswerkzeug kann ähnlich wie ein Honwerkzeug zum Innenrundhonen ausgebildet sein.

Das Bearbeitungswerkzeug hat mindestens ein durch den Werkzeugkörper getragenes Wälzelement mit einer rotationssymmetrischen Außenfläche mit rauer Oberflächenstruktur, welche zur Erzeugung der Rollprägestruktur dient. Das Wälzelement ist um eine Wälzelementachse drehbar, welche exzentrisch zur Werkzeugachse, also mit Abstand außerhalb der Werkzeugachse, angeordnet sein kann. Durch Drehen des Bearbeitungswerkzeugs um seine Werkzeugachse rollt die Außenfläche des Wälzelementes dann während der Rollprägeoperation mit ihrer rauen Oberflächenstruktur auf der Innenfläche der zu bearbeitenden Bohrung ab und erzeugt die Rollprägestruktur.

Die Wälzelementachse eines Wälzelements kann parallel zur Werkzeugachse verlaufen. Alternativ kann die Wälzelementachse aber auch schräg zur Werkzeugachse in radialer Richtung verlaufen. Wälzelemente mit parallel zur Werkzeugachse verlaufender Wälzelementachse sind dabei zur Bearbeitung einer parallel zur Werkzeugachse erstreckenden Werkstückoberfläche vorgesehen. Durch Wälzelemente, welche eine schräg verlaufende Wälzelementachse aufweisen, können schräg zur Werkzeugachse verlaufende Werkstückoberflächen bearbeitet werden, insbesondere Fasen am Eingang und/oder am Ausgang von Bohrungen oder dergleichen.

Manche Ausführungsformen haben mindestens ein Wälzelement mit einer parallel zur Werkzeugachse verlaufen Wälzelementachse und zusätzlich mindestens ein Wälzelement mit einer schräg zur Werkzeugachse verlaufen Wälzelementachse. Durch die Verwendung eines solchen Bearbeitungswerkzeuges ist es somit in einer Werkstückaufspannung möglich, sowohl die Innenfläche einer Bohrung als auch mindestens eine Fase der Bohrung zu bearbeiten und die Rollprägestruktur nicht nur in der Innenfläche, sondern auch in der Fasenoberfläche zu erzeugen. Mit einem solchen Bearbeitungswerkzeug können auf diese Art und Weise z.B. ohne einen zusätzlichen Fertigungsschritt die Beschichtungseigenschaften der Fase bzw. des Übergangs zwischen zylindrischem Bohrungsabschnitt und Fase verbessert werden.

Manche Bearbeitungswerkzeuge haben ein oder mehrere Wälzelemente, die angrenzend an eine zylindermantelförmige Außenfläche mit rauer Oberflächenstruktur mindestens eine weitere rotationssymmetrische, konische Außenfläche mit einer rauen Oberflächenstruktur aufweisen, wobei sich diese Außenfläche mit zunehmendem Abstand von der zylindermantelförmigen Außenfläche in der Regel verjüngt, ggf. aber auch verbreitet. Eine konische Außenfläche kann auf der spindelabgewandten und/oder auf der spindelzugewandten Seite an die zylindermantelförmige Außenfläche angrenzen. Mit einem solchen Bearbeitungswerkzeug können in einer Aufspannung zeitversetzt die Fasen und die zylindrische Innenfläche einer Bohrung einer Rollprägeoperation unterzogen werden.

Manche Ausführungsformen mit exzentrisch zur Werkzeugachse angeordnetem Wälzelement bzw. Wälzelementen sind gekennzeichnet durch ein Wälzelement-Zustellsystem zur variabel steuerbaren Zustellung des Wälzelements in einer radial zur Werkzeugachse verlaufenden Zustellrichtung. Hierdurch ist es möglich, den wirksamen Durchmesser des Werkzeuges über einen vorgebbaren Zustellbereich stufenlos zu verändern, so dass beispielsweise ein Bearbeitungswerkzeug zunächst mit eingezogenen Wälzelementen in eine Bohrung eingeführt werden kann, bevor die Wälzelemente dann zur Erzielung des Kontakts mit der Bohrungsinnenfläche nach außen zugestellt werden und die Bearbeitung beginnt. Durch eine variabel steuerbare Zustellung ist auch der Anpressdruck exakt einstellbar und kann gegebenenfalls während der Bearbeitung verändert werden.

Ein Bearbeitungswerkzeug kann ein einziges Wälzelement aufweisen. Ein Wälzelement kann einteilig oder in mehrere unabhängig voneinander drehbare, koaxiale Wälzelementsegmente segmentiert sein. In der Regel sind am Werkzeugkörper mehrere gleichmäßig oder ungleichmäßig um den Umfang verteilte Wälzelemente angeordnet. Eine Ausführungsform hat drei gleichmäßig um den Umfang verteilte Wälzelemente. Es hat sich herausgestellt, dass hierdurch das Bearbeitungswerkzeug optimal der aus vorgeschalteten Bearbeitungsstufen resultierenden Bohrungsform folgen kann, so dass sich an allen Wälzelementen im Wesentlichen die gleichen Anpressdrücke ohne Druckspitzen einstellen und eine gleichmäßig strukturierte Oberfläche entsteht. Sind mehrere Wälzelemente vorgesehen, so sind diese vorzugsweise über ein gemeinsames Wälzelement-Zustellsystem gemeinsam zustellbar. Eine separate Zustellung unabhängig voneinander ist ebenfalls möglich.

Alternativ oder zusätzlich kann ein Bearbeitungswerkzeug in einer Werkzeuglängsrichtung mehrere Wälzelemente aufweisen. Diese können gleichmäßig oder ungleichmäßig in Längsrichtung verteilt am Werkzeugkörper angeordnet sein.

In der Regel sind die am Umfang verteilten Wälzelemente ringförmig in gleichem Abstand ihrer Wälzelementachsen bzw. ihrer Mittelpunkte zur Werkzeugachse angeordnet. Die Wälzelemente können aber auch exzentrisch mit unterschiedlichen Abständen zur Werkzeugachse am Umfang verteilt angeordnet sein.

Es sind auch Ausführungsformen möglich, bei denen ein oder mehrere Wälzelemente an einem Schenkel eines L-förmigem Werkzeugkörpers angeordnet sind und der Schenkel mit den Wälzelementen um den anderen Schenkel drehbar ist, welcher die Werkzeugachse definiert. Wird ein solches Bearbeitungswerkzeug an der Arbeitsspindel eines Bearbeitungszentrums angeordnet, kann durch eine entsprechende Bahnsteuerung eine exzentrische Abrollbewegung der Wälzelemente erzeugt werden.

Ein Wälzelement kann direkt am Werkzeugkörper bzw. in einem am Werkzeugkörper montierten Lager gelagert sein. Vorzugsweise ist jedoch am Werkzeugkörper mindestens ein relativ zu dem Werkzeugkörper radial zur Werkzeugachse bewegliches Trägerelement angeordnet und das Wälzelement ist an dem Trägerelement drehbar gelagert. Bearbeitungswerkzeuge zum Bearbeiten der Innenfläche von Bohrungen können insoweit ähnlich aufgebaut sein wie Honwerkzeuge zum Innenrundhonen, wobei jedoch u.a. anstelle der für das Honen erforderlichen abrasiven Honsteine ein oder mehrere nicht-abrasive Wälzelemente vorgesehen sind.

Um die radiale Zustellung von Wälzelementen zu ermöglichen, ist bei manchen Ausführungsformen im Werkzeugkörper ein parallel zur Werkzeugachse bewegliches Zustellelement mit mindestens einem Keilabschnitt angeordnet, der beispielsweise die Form eines Konus oder Kegelstumpfs haben kann. Dessen Schrägflächen können mit Schrägflächen an der Innenseite von Trägerelementen für die Wälzelemente nach Art eines Keilantriebs zusammenwirken, so dass eine axiale Bewegung des Zustellelementes zu einer radialen Bewegung von Trägerelementen und der daran angebrachten Wälzelemente führt.

Bei manchen Ausführungsformen trägt die Außenfläche des Wälzelementes in dem Arbeitsabschnitt, der die raue Oberflächenstruktur bildet, eine dünne Antihaftbeschichtung, durch die die Haftung zwischen der rauen Außenfläche des Arbeitsabschnitts und der bearbeiteten Werkstückoberfläche gegenüber einer Außenfläche ohne Antihaftbeschichtung verringert wird. Die Antihaftbeschichtung kann z.B. eine TiN-Beschichtung oder eine DLC (diamond like carbon)-Beschichtung sein. Wird die Haftung verringert, so löst sich die raue Oberflächenstruktur des Außenbereichs beim Abrollen nach dem Eindringen in das Werkstückmaterial leichter vom danach strukturierten Werkstückmaterial ab, ohne kleine anhaftende Werkstoffpartikel aus der strukturierten Oberfläche herauszureißen, die dann gegebenenfalls nachgeschaltete Bearbeitungsschritte beeinträchtigen können. Dadurch kann auf den Einsatz von flüssigen Fertigungshilfsstoffen, wie beispielsweise Kühlschmierstoff o.dgl., während der Rollprägebearbeitung verzichtet werden, so dass die Rollprägeoperation als Trockenbearbeitungsschritt durchgeführt werden kann. Hierdurch lassen sich Fertigungskosten in erheblichem Umfang einsparen. Außerdem sind trocken erzeugte Rollprägestrukturen in der Regel ohne weitere Nachbearbeitung unmittelbar für eine Beschichtung geeignet.

Manche Ausführungsformen von Bearbeitungswerkzeugen sind dazu geeignet, bahngeführt betrieben zu werden. In der Regel sind sie für die Verwendung in Bearbeitungszentren, insbesondere in 3-, 4- oder 5-Achs-CNC-Bearbeitungszentren ausgebildet und können am Werkzeugkörper entsprechende Kupplungsstrukturen zum Anschluss an die Arbeitsspindel eines Bearbeitungszentrums haben. Mit solchen Bearbeitungswerkzeugen können sowohl rotationssymmetrische Innenflächen, als auch Innenflächen von nicht runden bzw. nichtzylindrischen Bohrungen, insbesondere ovale Ausnehmungen oder dergleichen, bearbeitet werden. Insbesondere können mit einem solchen Bearbeitungswerkzeug Rollprägestrukturen in Werkstückoberflächen wie beispielsweise Kolbenlaufflächen von Wankelmotoren erzeugt werden. Es ist aber auch möglich, mit solchen Bearbeitungswerkzeugen nicht gekrümmte bzw. ebene Werkstückoberflächen oder ebene Abschnitte von teilweise gekrümmten Werkstückoberflächen zu bearbeiten. Bearbeitungswerkzeuge, die für die Verwendung in Bearbeitungszentren vorgesehen sind, haben in der Regel einen deutlich kleineren Außendurchmesser als die zu bearbeitende Ausnehmung. Sie sind flexibel einsetzbar, so dass nicht zu jedem Bohrungsdurchmesser ein entsprechendes, passendes, nahezu bohrungsausfüllendes Bearbeitungswerkzeug bereitgehalten werden muss. Des weiteren kann bei bahngeführten Bearbeitungswerkzeugen in der Regel das Wälzelement-Zustellsystem entfallen, da der erforderliche Anpressdruck der Wälzelemente an die zu bearbeitende Werkstückoberfläche über die Bahnführung des Bearbeitungswerkzeugs gesteuert werden kann.

Bei einem bahngeführten Bearbeitungswerkzeug kann die Wälzelementachse mindestens eines Wälzelements konzentrisch bzw. koaxial zur Werkzeugachse liegen. Es ist nicht erforderlich, das Werkzeug als Ganzes drehend anzutreiben, denn das mindestens eine Wälzelement wird bei der Bahnführung durch den Abrollkontakt mit der bearbeiteten Innenfläche um seine Wälzelementachse gedreht.

Die Anmeldung offenbart auch ein Werkstück, das unter Nutzung des Bearbeitungsverfahrens und/oder unter Verwendung des Bearbeitungswerkzeuges erhältlich bzw. hergestellt oder herstellbar ist. Bei dem Werkstück kann es sich insbesondere um ein Zylinderkurbelgehäuse aus einem Leichtmetallwerkstoff oder um eine in eine Zylinderbohrung einzubauende Zylinderhülse handeln. Es kann sich auch um ein Pleuel handeln, bei dem mindestens eine Pleuelbohrung mit Hilfe einer Rollprägeoperation, ggf. mit nachgeschalteter Beschichtung, bearbeitet wurde. Das Werkstück kann auch ein Extruderrohr mit Innenbeschichtung sein.

Mit einem bahngeführten Bearbeitungswerkzeug können auch nichtzylindrische Innenflächen eines Werkstücks bearbeitet werden, insbesondere die Kolbenlauffläche eines Wankelmotorgehäuses.

Diese und weitere Merkmale gehen außer den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele sind in den Zeichnungen dargestellt und werden im Folgenden näher erläutert.

### KURZBESCHREIBUNG DER ZEICHNUNGEN

- Fig. 1: zeigt einen Axiallängsschnitt durch eine Ausführungsform eines einfach aufweitbaren Bearbeitungswerkzeuges zum Rollprägen von Bohrungsinnenflächen;
- Fig. 2: zeigt eine Seitenansicht in teilweisem Schnitt des Bearbeitungswerkzeuges aus Fig. 1;
- Fig. 3: zeigt einen axialen Schnitt durch eine Ausführungsform eines Bearbeitungswerkzeuges mit Doppelaufweitung;
- Fig. 4: zeigt in 4A eine schrägperspektivische Ansicht eines Trägerelementes für ein Wälzelement, welches elastisch nachgiebig am Trägerelement gelagert ist und in 4B und 4C Beispiele zur Verwendung von Federn bei der elastisch nachgiebigen Lagerung von Wälzelementen;
- Fig. 5: zeigt schematisch den Ablauf eines Rollprägeschrittes bei der Bearbeitung einer konkav zylindrisch gekrümmten Bohrungsinnenfläche mittels eines Wälzelementes, das eine raue Oberflächenstruktur mit stochastisch verteilten Erhebungen und Vertiefungen hat;
- Fig. 6: zeigt schematisch den Ablauf eines Rollprägeschrittes bei der Bearbeitung einer konkav zylindrisch gekrümmten Bohrungsinnenfläche mittels eines Wälzelementes, das an seinem Umfang gleichmäßig verteilte Erhebungen hat (gehört nicht zur beanspruchten Erfindung);
- Fig. 7: zeigt schematisch das Rollprägen an einer konvex gekrümmten Werkstückaußenfläche;
- Fig. 8: zeigt einen schematischen Schnitt durch eine Werkstückoberfläche, die zunächst durch Rollprägen aufgeraut und anschließend durch thermisches Spritzen beschichtet wurde;
- Fig. 9: zeigt einen schematischen Schnitt durch den Bereich der Werkstückoberfläche bei einem anderen Werkstück, bei dem zwischen dem Rollprägen und einer nachfolgenden Beschichtung noch eine Umformbearbeitung zur Abplattung von Spitzen der Rollprägestruktur zwischengeschaltet wurde (gehört nicht zum Verfahren der beanspruchten Erfindung);
- Fig. 10: zeigt eine schematische schrägperspektivische Ansicht des Bereichs einer Werkstückoberfläche, die zunächst durch Rollprägen strukturiert und danach mittels Plateauhonen feinbearbeitet wurde (gehört nicht zum Verfahren der beanspruchten Erfindung);
- Fig. 11: zeigt in Fig. 11A eine Seitenansicht einer Ausführungsform eines Bearbeitungswerkzeugs mit Wälzelementen mit einer Wälzelementachse parallel zur Werkzeugachse sowie mit Wälzelementen mit einer Wälzelementachse schräg zur Werkzeugachse und in schräg radialer Richtung verlaufend und in den Fig. 11B, 11C, 11D und 11E jeweils vergrößerte Darstellungen der unterschiedlichen Wälzelemente aus Fig. 11A mit zugehörigen Trägerelementen;
- Fig. 12: zeigt in schräg perspektivischer Ansicht ein 4-Achs-Bearbeitungszentrum mit einer Spindel zur Aufnahme eines Bearbeitungswerkzeugs sowie einem Rundtisch mit einem darauf angeordneten zu bearbeitenden Werkstück;
- Fig. 13: zeigt in schräg perspektivischen Ansicht in Fig. 13A das Bearbeitungszentrum aus Fig. 12 mit einem zu bearbeitenden Werkstück mit einer zylindrischen Bohrung sowie eine Ausführungsform eines an der Spindel des Bearbeitungszentrums angekoppelten Bearbeitungswerkzeugs mit einer zylindermantelförmigen Außenfläche und zwei konischen Außenflächen und in Fig. 13B in vergrößerter Darstellung das Bearbeitungswerkzeug aus Fig. 13A;
- Fig. 14: zeigt in Schnittdarstellung das Bearbeitungswerkzeug aus Fig. 13 als Einzelteil;
- Fig. 15: zeigt in Schnittdarstellung eine der in Fig. 14 dargestellten Ausführungsform ähnliche Ausführungsform eines Bearbeitungswerkzeugs mit nur einer einzigen konischen Außenfläche an einer spindelabgewandten Seite der zylindermantelförmigen Außenfläche des Wälzelements;
- Fig. 16: zeigt in Schnittdarstellung eine Ausführungsform eines Bearbeitungswerkzeugs mit mehreren übereinander angeordneten Wälzelementen mit jeweils konzentrisch zur Werkzeugachse verlaufenden Wälzelementachsen und
- Fig. 17: zeigt in Fig. 17A eine Seitenansicht auf eine Ausführungsform eines exzentrischen Bearbeitungswerkes mit einem L-förmigen Werkzeugkörper und in Fig. 17b eine Draufsicht auf das Bearbeitungswerkzeug aus Fig. 17A.

### DETAILLIERTE BESCHREIBUNG BEVORZUGTER AUSFÜHRUNGSFORMEN

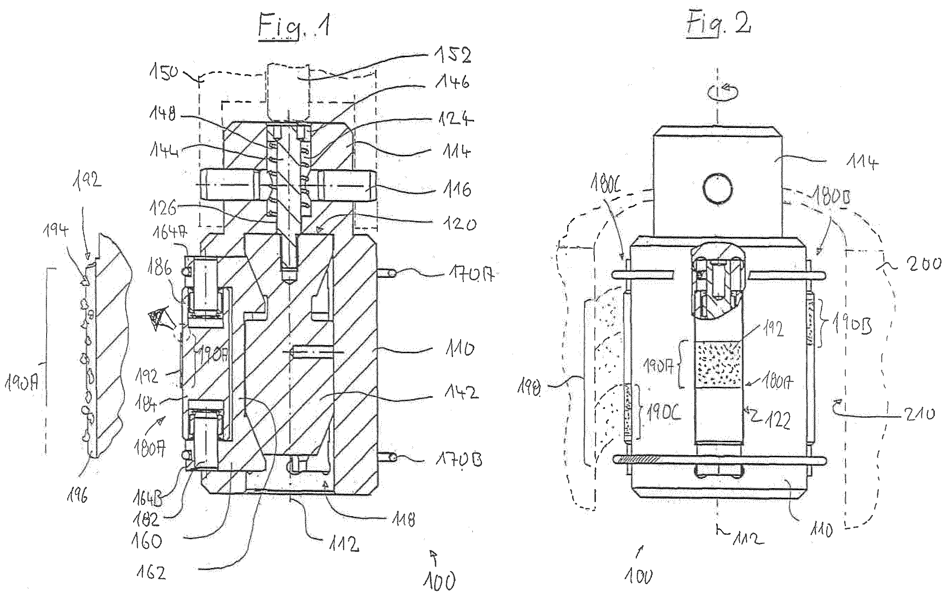

In Fig. 1 ist ein schematischer axialer Schnitt durch eine erste Ausführungsform eines Bearbeitungswerkzeugs 100 zum Rollprägen gezeigt. Das Bearbeitungswerkzeug (Rollprägewerkzeug) ist für die Bearbeitung von weitgehend kreiszylindrischen Innenflächen an Bohrungen ausgelegt, insbesondere zur Erzeugung von Zylinderlaufflächen für eine Brennkraftmaschine. Das Bearbeitungswerkzeug hat einen aus Stahl gefertigten, weitgehend rotationssymmetrischen Werkzeugkörper 110, dessen Mittelachse die Werkzeugachse 112 definiert. Das spindelzugewandte Ende des Werkzeugkörpers wird durch einen verjüngten Kupplungsabschnitt 114 mit zylindrischer Außenkontur gebildet, bei dem an diametral gegenüberliegenden Positionen radial abstehende Mitnehmerstifte 116 angebracht sind. Mit Hilfe dieser Kupplungseinrichtungen kann das Bearbeitungswerkzeug an das mit winkligen Aufnahmeschlitzen für die Mitnehmerstifte versehene freie Ende der Antriebsstange 150 einer Honmaschine angekoppelt werden. Das angekoppelte Bearbeitungswerkzeug ist nicht starr mit der angetriebenen Honspindel der Honmaschine verbunden, sondern mittels geeigneter Maschinenelemente gegenüber dieser begrenzt beweglich, was beispielsweise durch eine kardanische Ankopplung oder eine Ankopplung nach Art eines Schwimmkopfs oder durch eine biegeelastische Antriebsstange erreicht werden kann.

Vom spindelabgewandten Ende des Werkzeugkörpers führt eine zentrische zylindrische Aufnahmebohrung 118 mit einer ebenen Endfläche 120 in den Werkzeugkörper hinein, so dass dieser Abschnitt rohrförmig gestaltet ist. In der dadurch gebildeten Rohrwandung befinden sich drei gleichmäßig um den Umfang verteilte, radial von innen nach außen durchgehende, im Wesentlichen rechteckförmige Durchgangsschlitze 122 zur Aufnahme von später näher erläuterten Trägerelementen für Wälzelemente. Vom spindelzugewandten Ende des Kupplungsabschnitts 114 führt eine weitere zylindrische Aufnahmebohrung 124 mit ebener Grundfläche in den Kupplungsabschnitt hinein. Zwischen den Aufnahmebohrungen 124 und 118 befindet sich eine zylindrische Durchgangsbohrung 126 mit nochmals kleinerem Durchmesser.

Die koaxialen Bohrungen 118, 126 und 124 dienen zur Aufnahme von werkzeuginternen Elementen eines Wälzelement-Zustellsystems. Hierzu gehört ein doppelt-konischer Aufweitkonus 142, der axial verschieblich und spielfrei in der spindelabgewandten Aufnahmeöffnung 118 sitzt. An der spindelzugewandten Stirnfläche des Aufweitkonus ist eine zentrische Sacklochbohrung mit Innengwinde angebracht, in welches beim Zusammenbau des Bearbeitungswerkzeuges ein mit Außengewinde versehender Gewindeabschnitt einer Druckstange 144 eingeschraubt wird, die von der spindelzugewandten Seite in die Aufnahmeöffnung 124 des Kupplungsabschnitts eingesetzt wird. Die Druckstange hat einen verbreiterten zylindrischen Kopfabschnitt 146, der im Wesentlichen seitenspielfrei, aber axial beweglich in die Aufnahmebohrung 124 hineinpasst. Beim Zusammenbau durchgreift die Druckstange eine in die Aufnahmebohrung 124 eingeführte Spiraldruckfeder 148, die sich nach Verschraubung der Druckstange mit dem Aufweitkonus einerseits an dem verbreiterten Kopfabschnitt 146 und andererseits am ebenen Grund der Aufnahmebohrung 124 abstützt. Hierdurch wird erreicht, dass in Abwesenheit äußerer Kräfte die Druckstange und der daran angeschraubte Aufweitkonus ihre in Fig. 1 gezeigte obere Anschlagstellung einnehmen, in der die spindelseitige Stirnfläche des Aufweitkonus an dem ebenen Bohrungsgrund der Aufnahmebohrung 118 anschlägt.

In der hohlen Antriebsstange 150 befindet sich eine mit Hilfe eines Zustellantriebs der Honmaschine axial verschiebliche Zustellstange 152, deren freie Stirnseite bei angekoppelten Bearbeitungswerkzeugen auf die spindelseitige Stirnseite der Druckstange 144 wirkt.

In jedem der um 120° umfangsversetzten, radial durchgehenden Durchgangsschlitze 122 sitzt ein leistenförmiges Trägerelement 160, welches radial beweglich und axial sowie in Umfangsrichtung weitgehend spielfrei in den Durchgangsschlitz passt. Jedes Trägerelement hat an seiner Innenseite zwei axial übereinanderliegende Schrägflächen, die bei zusammengebautem Werkzeug mit den axial übereinanderliegenden Konusflächen des Aufweitkonus 142 nach Art eines Keilantriebs derart zusammenwirken, dass eine Axialverschiebung des Aufweitkonus eine radiale Verschiebung des Trägerelementes bewirkt.

Jedes Trägerelement hat einen innen liegenden Basisabschnitt 162, an dem die innen liegenden Schrägflächen angebracht sind, sowie an den schmalen Endseiten jeweils nach außen abragende Lagerabschnitte 164A, 164B. Jedes Trägerelement trägt ein Wälzelement 180A, 180B, 180C, das an den Lagerabschnitten des Trägerelementes derart drehbar gelagert ist, dass die als Wälzelementachse 182 bezeichnete Rotationsachse des Wälzelementes mit Abstand außerhalb der Werkzeugachse 112 parallel zu dieser verläuft.

Ein Herausfallen der Trägerelemente bei vollständig montiertem Bearbeitungswerkzeug wird durch umlaufende Rückholfedern 170A, 170B verhindert, die in außen liegenden Nuten in den Lagerabschnitten gehalten werden und eine Rückstellkraft auf die Trägerelemente in Richtung Werkzeugachse ausüben. In Abwesenheit von Druck auf die obere Stirnfläche der Druckstange 144 befinden sich die Trägerelemente in ihrer maximal eingezogenen Stellung, die dem minimalen Wirkdurchmesser des Bearbeitungswerkzeugs entspricht. Der Wirkdurchmesser kann vergrößert werden, indem die Zustellstange 152 in Richtung des Bearbeitungswerkzeuges so weit vorgeschoben wird, dass die Druckstange in Richtung des spindelfernen Endes gedrückt wird. Dadurch bewegt sich auch der Aufweitkonus zum spindelfernen Ende, so dass die Schrägflächen im Bereich der Konusabschnitte aneinander abgleiten und die Tragleisten zur Vergrößerung des Abstandes zwischen Werkzeugachse und Wälzelementachse gegen die Kraft der Druckfeder 148 und der Rückholfedern 170A, 170B nach außen gedrückt werden. Zum Zurückziehen muss lediglich die Zustellstange 152 zurückgezogen werden, die Rückstellkraft kommt dann aus den Federelementen.

Jedes Wälzelement hat einen rotationssymmetrischen, im Wesentlichen zylindrischen Wälzelementkörper 184 aus Werkzeugstahl, an dessen gegenüberliegenden Stirnseiten Sacklochbohrungen eingebracht sind. In jeder der Bohrungen sitzt ein Außenring eines gekapselten Nadellagers 186. Das Innenelement eines Nadellagers wird durch einen zylindrischen Bolzen gebildet, der beim Zusammenbau im Lagerabschnitt des Trägerelementes befestigt wird. Das mit geringem Rollwiderstand laufende und gegen radiale Kräfte sehr stabile Nadellager ist nach außen gegen Eindringen von Verunreinigungen, wie beispielsweise flitterartige Werkstoffpartikel, gekapselt, um während der Bearbeitung ein störungsfreies Drehen des Wälzelementes gegenüber dem Trägerelement zu ermöglichen.

In der vergrößerten Detaildarstellung in Fig. 1 ist besonders gut zu erkennen, dass die Außenfläche des Wälzelementes 180A in einem für einen Abrollkontakt mit der Werkstückoberfläche bestimmten Arbeitsabschnitt 190 eine raue Oberflächenstruktur aufweist. Hierzu hat der Wälzelementkörper einen zylindrischen Ringbund, dessen Außendurchmesser geringfügig größer ist als der Außendurchmesser der daran axial anschließenden Außenabschnitte. Die Außenfläche dieses Ringbunds trägt eine Beschichtung 192 mit relativ grobkörnigen Diamantkörnern 194, die in einer galvanisch auf den Wälzelementkörper aufgebrachten metallischen Bindung 196 fest haftend vorliegen. Die außen aus dem Bindungsmaterial herausragenden Kornabschnitte bilden Erhöhungen, die gegenüber dazwischen liegenden, relativ zu den Erhöhungen als Vertiefungen erscheinenden Bereichen der Bindung nach außen vorspringen. Die mittlere Korngröße der Diamantkörner liegt hier zwischen ca. 30 µm und ca. 100 µm.

Die parallel zur Werkzeugachse bzw. zur Wälzelementachse gemessene Breite des Arbeitsabschnittes 190A beträgt nur ca. ein Drittel der axialen Länge des Wälzelementkörpers. Wie in Fig. 2 gut zu erkennen ist, haben die beiden anderen am Umfang des Bearbeitungswerkzeugs angebrachten Wälzelemente 180B, 180C grundsätzlich einen ähnlichen Aufbau. Jedoch sind die Arbeitsabschnitte der Wälzelemente axial gegeneinander derart versetzt, dass insgesamt beim Drehen des Bearbeitungswerkzeuges eine Bearbeitungsbreite 198 abgedeckt wird, die etwa dem Dreifachen der Breite eines einzelnen Arbeitsabschnitts entspricht. Jeder der relativ schmalen Arbeitsabschnitte bearbeitet somit beim Drehen einen relativ schmalen Streifen der konkavzylindrischen Werkstückoberfläche 210 des Werkstücks 200. In diesem Streifen kann ein für den Rollprägevorgang ausreichende Anpressdruck relativ gleichmäßig im ganzen Arbeitsbereich eingestellt und aufrechterhalten werden. Die axial versetzten Arbeitsabschnitte der anderen Wälzelemente bearbeiten unmittelbar anschließend und geringfügig überlappende Nachbarstreifen, so dass sich insgesamt eine effiziente Bearbeitung eines relativ breiten Bearbeitungsabschnitts der Innenfläche ergibt.

Zum Bearbeiten der Innenfläche einer Bohrung wird das Bearbeitungswerkzeug zunächst so weit in die Bohrung eingefahren, dass der kombinierte Bearbeitungsbereich der einzelnen Wälzelemente den Beginn eines zu bearbeitenden Abschnitts abdeckt. Diese Einführung erfolgt bei zurückgezogenen Wälzelementen. Danach werden die Wälzelemente mit Hilfe des Wälzelement-Zustellsystems nach außen zugestellt, bis die Wälzelemente unter geeigneten Anpressdruck an der Innenfläche anliegen. Vor dieser radialen Zustellung, nach dieser radialen Zustellung oder während der radialen Zustellung wird das Werkzeug über den Drehantrieb der Honspindel in Drehung um die Werkzeugachse versetzt. Dabei werden die Arbeitsbereiche der Wälzelemente so an die Innenfläche angedrückt, dass deren raue Oberflächenstruktur sich in die Werkstückoberfläche einprägt und im Wesentlichen eine komplementäre Rollprägestruktur mit nebeneinander liegenden Erhöhungen und Vertiefungen erzeugt, also eine Rollprägestruktur, die im Wesentlichen ein der Struktur des Rollprägewerkzeugs entsprechendes negatives Abbild darstellt. Nach einer oder mehreren Drehungen ist die Rollprägeoperation für den entsprechenden axialen Abschnitt der Bohrung beendet und die Trägerelemente werden nach innen zurückgestellt, so dass der Berührungskontakt zwischen Wälzelementen und Bohrungsinnenfläche aufgehoben wird.

Ist der zu bearbeitende Innenabschnitt der Bohrung länger als die Arbeitsbreite der kombinierten Arbeitsbereiche, so wird das Bearbeitungswerkzeug danach in Axialrichtung so weit vorgeschoben, dass das Werkzeug auf Höhe des nächsten zu bearbeitenden Abschnitts der Bohrung liegt. Dann wird die Abfolge von Arbeitsschritten mit radialer Zustellung nach außen, Beginn der Drehbewegung, Rollprägen und anschließendem Zurückziehen wiederholt.

Während des Rollprägens, d.h. während des Bearbeitungseingriffs der Wälzelemente an der Bohrungsinnenfläche, findet kein axialer Vorschub der Arbeitsspindel bzw. des Bearbeitungswerkzeuges statt.

Der für die Materialverformung beim Rollprägen maßgebliche Anpressdruck kann mit Hilfe des Wälzelement-Zustellsystems zeitlich variabel eingestellt werden. So ist es beispielsweise möglich, an ein und derselben Bohrungsinnenfläche durch Rollprägen zwei oder mehr unterschiedlich bearbeitete Abschnitte zu erzeugen, bei deren Bearbeitung die Wälzelemente mit unterschiedlichem Anpressdruck aufgepresst wurden. Es ist auch möglich, neben rollgeprägten Abschnitten ungeprägte Abschnitte zu belassen. Beispielsweise kann das Rollprägen auf den oberen und/oder unteren Zwickelbereich einer Zylinderbohrung beschränkt sein.

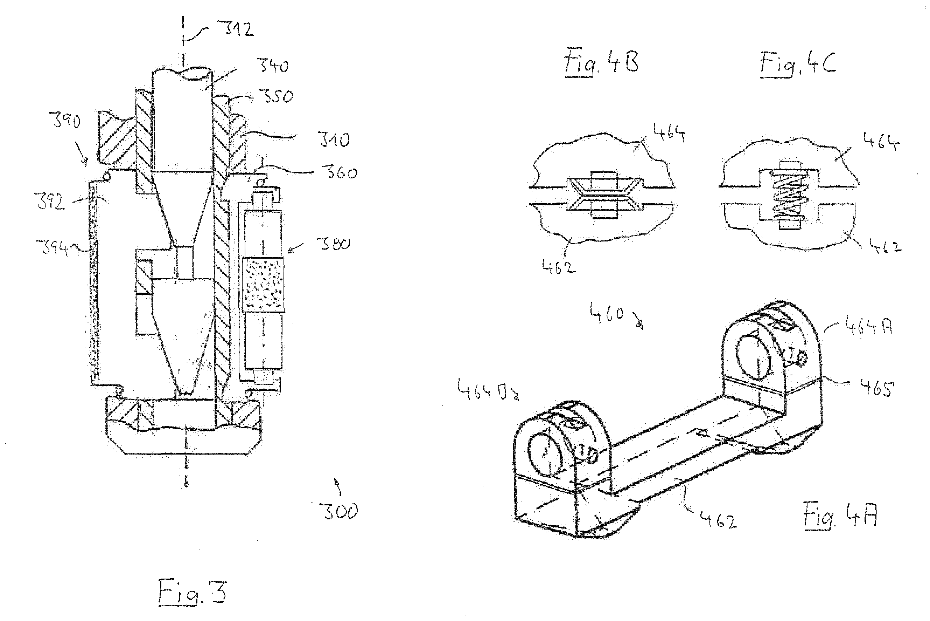

Das in den Fig. 1 und 2 gezeigte Bearbeitungswerkzeug 100 ist als reines Rollprägewerkzeug ausgelegt. Es ist auch möglich, das Rollprägen mit Hilfe eines Kombinationswerkzeuges durchzuführen, welches es erlaubt, ohne Werkzeugwechsel zusätzlich zum Rollprägen (oder alternativ dazu) mindestens eine weitere Bearbeitungsoperation an der Werkstückoberfläche durchzuführen. Fig. 3 zeigt hierzu beispielhaft einen Längsschnitt durch ein Bearbeitungswerkzeug 300, das zusätzlich zu mehreren gleichmäßig um den Umfang verteilten Wälzelementen (ein Wälzelement 380 ist gezeigt) einen Satz von mehreren, ebenfalls gleichmäßigen um den Umfang des Bearbeitungswerkzeugs verteilten Honleisten aufweist, die unabhängig von den Wälzelementen radial zur Werkzeugachse 312 zustellbar sind. Die Honleisten stehen beispielhaft für weitere Bearbeitungselemente, die für ein anderes Bearbeitungsverfahren, im Beispielsfall für ein Material abtragendes Zerspanungsverfahren mit unbestimmten Schneiden, ausgelegt sind.

Bei anderen Varianten von Kombinationswerkzeugen sind zusätzlich zu einem oder mehreren Wälzelementen mit rauer Oberfläche (zum Rollprägen) noch separat zustellbare Glattwalzelemente (z.B. glatte Rollen) oder nicht-rollende Glättleisten mit harter, glatter Arbeitsfläche zum Kaltverfestigen ohne wesentlichen Materialabtrag vorgesehen.

Der im Wesentlichen rohrförmige Werkzeugkörper 310 hat sechs gleichmäßig um den Umfang verteilte, axial langgestreckte und in Umfangsrichtung relativ schmale, radial durchgehende Durchgangsöffnungen zur Aufnahme von Trägerelementen für die Bearbeitungselemente. In drei jeweils um 120° umfangsversetzten Durchgangsöffnungen sitzen Trägerelemente 360 für die darin drehbar gelagerten Wälzelemente 380. Deren Aufbau und Anordnung kann im Wesentlichen so sein wie im Zusammenhang mit den Fig. 1 bis 2 beschrieben, weshalb auf die dortige Beschreibung verwiesen wird. Jeweils in Umfangsrichtung mittig zwischen diesen Trägerelementen sind Honleisten 390 in den Durchgangsöffnungen angeordnet. Eine Honleiste hat eine in der Durchgangsöffnung des Werkzeugkörpers radial verschiebbar geführte Tragleiste 392, die an ihrer radialen Außenseite einen Schneidbelag 394 mit Schneidkörnern aus Diamant oder einem anderen harten, z.B. nitridischen oder karbidischen Material in einer metallischen oder keramischen Bindung trägt. An der Innenseite der Tragleiste sind im oberen und unteren Bereich jeweils Schrägflächen angebracht, die mit konischen Abschnitten am unteren Ende einer zentralen Zustellstange 340 derart zusammenwirken, dass eine Axialverschiebung der Zustellstange eine Radialverschiebung der Honleisten bewirkt. Die Axialbewegung der Zustellstange 340 wird durch einen nicht gezeigten Zustellmotor der Honmaschine erzeugt. Die Zustellstange ist Teil eines auf die Honleisten wirkenden zweiten Zustellsystems (Honleisten-Zustellsystem).

Die Tragelemente 360 für die um Wälzelementachsen 312 drehbaren Wälzelemente haben an ihren Innenseiten Schrägflächen, die mit konischen Schrägflächen an der Außenseite einer rohrförmigen Zustellstange 350 zusammenwirken, welche die innere Zustellstange 340 umgibt. Das Wälzelement-Zustellsystem arbeitet unabhängig von dem Zustellsystem für die Honleisten, so dass insbesondere wahlweise nur die Wälzelemente oder nur die Honleisten im Bearbeitungseingriff mit der zu bearbeitenden Bohrungsinnenfläche gebracht werden können. Wenn das Bearbeitungswerkzeug z.B. ausschließlich für das Rollprägen benutzt werden soll, kann die innere Zustellstange 340 zurückgezogen bleiben, so dass die Honleisten permanent außer Eingriff mit der Werkstückoberfläche sind.

Das Bearbeitungswerkzeug kann insbesondere bei Bearbeitungsverfahren eingesetzt werden, bei denen zunächst eine Honbearbeitung der Bohrungsinnenfläche und danach eine Rollprägeoperation an der gehonten Oberfläche erzeugt werden soll. Es ist auch möglich, das Honwerkzeug bei Verfahren einzusetzen, bei denen die Bohrungsinnenfläche zunächst mit anderen Verfahren vorbereitet wird und bei denen danach mit Hilfe des Kombinationswerkzeuges zunächst eine Rollprägeoperation und danach eine Honoperation durchgeführt wird. Es wäre auch möglich, mit Hilfe des Bearbeitungswerkzeuges eine Innenfläche zunächst mit Hilfe der Honleisten zu honen, danach die gehonte Werkstückoberfläche einer Rollprägeoperation zu unterziehen und danach die dadurch entstandenen Rollprägestrukturen erneut mit den gleichen Honleisten, aber geringerem Materialabtrag nachzubearbeiten. Bei der zweiten Honoperation wird vorzugsweise mit gegenüber der ersten Honoperation verringertem Anpressdruck gearbeitet, um eine feinere Oberflächenstruktur an Plateauflächen zu erzeugen.

Durch die begrenzte Beweglichkeit der Ankopplung zwischen Bearbeitungswerkzeug und der dieses antreibenden Honspindel ist das Bearbeitungswerkzeug in der Lage, bei den Rollprägeoperationen der Bohrungsform in gewissem Umfang nachzulaufen, so dass auch bei geringfügigen Abweichungen der Bohrungsform von einer ideal kreiszylindrischen Form keine inakzeptablen Zwangskräfte auftreten.

Eine weitere Verbesserung und Vergleichmäßigung der Bearbeitungsqualität beim Rollprägen wird bei manchen Ausführungsformen dadurch erreicht, dass die Lagerung der Wälzelemente eine gewisse elastische Nachgiebigkeit aufweist, um dadurch beispielsweise beim Überrollen von Oberflächenerhebungen zurückweichen zu können und/oder durch leichte Schrägstellung der Wälzelementachse Unregelmäßigkeiten der Bohrungsform auszugleichen. Fig. 4 zeigt hierzu beispielhaft Ausführungsbeispiele von Tragelementen, die eine elastisch nachgiebige Lagerung der Wälzelemente ermöglichen.

Das Tragelement 460 in Fig. 4A hat einen länglichen Basisabschnitt 462, der an seiner Rückseite die Schrägflächen zum Zusammenwirken mit einem Aufweitkonus aufweist. An der gegenüberliegenden Seite sind an den Enden die beiden Lagerabschnitte 464A, 464B angebracht, die der Lagerung des Wälzelementes dienen. Im Gegensatz zur Ausführungsform in Fig. 1 sind die Lagerabschnitte nicht einstückig mit dem Basisabschnitt ausgebildet, sondern als davon gesonderte Bauelemente realisiert, die am Basisabschnitt unter Zwischenschaltung von elastisch nachgiebigen Verbindungsstrukturen befestigt sind, um eine begrenzte Beweglichkeit der Lagerabschnitte gegenüber dem Basisabschnitt zu ermöglichen. Bei der Variante in Fig. 4A befindet sich zwischen dem Basisabschnitt und den Lagerabschnitten jeweils eine Schicht 465 aus einem relativ harten, aber elastisch nachgiebigen Elastomermaterial. Wie in Fig. 4B, 4C gezeigt, kann die Nachgiebigkeit der Lagerung auch dadurch erreicht werden, dass zwischen dem Basisabschnitt 462 und einem Lagerabschnitt 464A oder 464B ein kleiner Abstand verbleibt, der mit Hilfe einer elastisch nachgiebigen Verbindungseinrichtung überbrückt wird. Diese enthält im Beispielsfall von Fig. 4B Tellerfederelemente und im Fall von Fig. 4C Schraubendruckfederelemente.

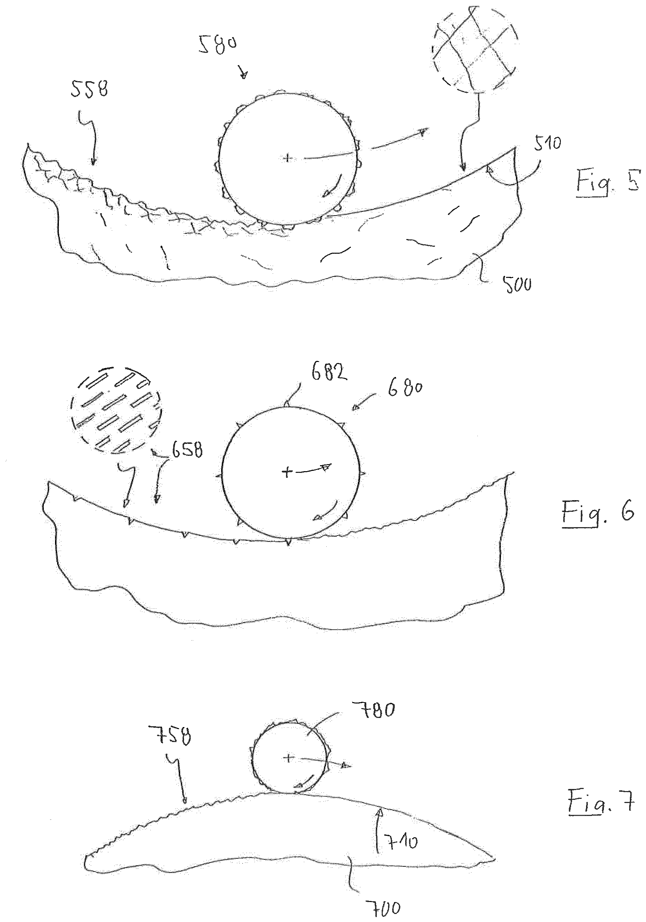

Anhand der Fig. 5 bis 10 werden beispielhaft einige Bearbeitungsverfahren beschrieben, bei denen eine Rollprägeoperation an einer gekrümmter Werkstückoberfläche durchgeführt wird. Fig. 5 zeigt beispielsweise einen Ausschnitt eines Werkstücks 500 im Bereich einer zylindrischen Bohrung, deren Innenfläche 510 die mittels Rollprägen zu bearbeitende Werkstückoberfläche bildet. Es kann sich beispielsweise um den Randbereich einer Zylinderbohrung in einem Zylinderkurbelgehäuse aus einem Aluminiumwerkstoff handeln. Zur Vorbereitung der Rollprägeoperation kann die Zylinderbohrung durch einen ein- oder mehrstufigen Material abtragenden Bearbeitungsprozess (z.B. Feinbohren und/oder Honen oder nur Leistungshonen) in die gewünschte Makroform gebracht werden. Durch eine unmittelbar vorangehende Honoperation kann die Werkstückoberfläche z.B. so fein bearbeitet werden, dass eine Oberflächenstruktur mit gekreuzten Bearbeitungsspuren und einer mittleren Rautiefe von weniger als 5µm vorliegt (siehe vergrößertes Detail). Danach wird ein zum Rollprägen eingerichtetes Bearbeitungswerkzeug, beispielsweise das Bearbeitungswerkzeug aus Fig. 1 oder Fig. 3, in die Bohrung eingefahren und die Wälzelemente 580 werden in Richtung Bohrungsinnenwand zugestellt, bis sie mit einem Anpressdruck anliegen. Bei Drehen des Bearbeitungswerkzeuges rollen die Wälzelemente an der Innenwand der Bohrung ab. Die grobkörnige galvanische Diamantkornbeschichtung bildet eine raue Oberflächenstruktur, wobei die aus der Bindung herausragenden Abschnitte der Diamantkörner erhabene Abschnitte bilden, zwischen denen zurückgesetzte Vertiefungen liegen. Die erhabenen Abschnitte sind unregelmäßig über die Oberfläche des Arbeitsbereichs verteilt. Beim Abrollen des Wälzelements an der Oberfläche und einem durch das Wälzelement-Zustellsystem eingestellten Anpressdruck prägen sich die unregelmäßigen Strukturen des Arbeitsbereichs in den oberflächennahen Randbereich des relativ weichen Werkstoffs ein, so dass eine Rollprägstruktur 558 mit unregelmäßig verteilten Erhöhungen und Vertiefungen entsteht, die bei oberflächlicher Betrachtung einer sandgestrahlten Oberfläche ähnlich sein kann. Der Aufwand zur Bereitstellung und Entsorgung von Strahlmaterial kann jedoch eingespart werden. Außerdem werden Gefahren vermieden, die durch nicht beseitigte Partikel des Strahlmaterials entstehen können. Zudem kann beim Rollprägen durch den im Kontaktbereich zwischen Wälzelement und Werkstückoberfläche wirkenden Anpressdruck eine Kaltverfestigung oberflächennaher Randschichten des Werkstücks erzeugt werden, die zu einer Festigkeitssteigerung des Werkstücksmaterials in unmittelbarer Nähe der Werkstückoberfläche führen. In Fig. 5 ist dies schematisch durch die hohe Versetzungsdichte in unmittelbarer Nähe der Rollprägestruktur symbolisiert.

Bei der Verfahrensvariante von Fig. 6 werden Wälzelemente 680 verwendet, die an einer ansonsten relativ glatten, kreiszylindrischen Außenfläche im Arbeitsbereich regelmäßig, insbesondere gleichmäßig verteilte, längliche harte Vorsprünge 682 aufweisen, die beispielsweise durch Aufschweißen, Auflöten oder durch einen lithographischen Prozess auf dem Wälzelementkörper aufgebracht sein können. Wird eine durch Honen oder auf andere Weise mit einer gewissen Grundrauhigkeit versehene Oberfläche 610 eines Werkstücks 600 mit Hilfe dieser Wälzelemente bearbeitet, kann durch die glatten Umfangsabschnitte zwischen den Vorsprüngen eine Glättung der Oberfläche erreicht werden. Die Vorsprünge graben sich dagegen unter Materialverdrängung in die Werkstückoberfläche ein, so dass eine Rollprägestruktur 658 mit einem regelmäßigen Muster von relativ schmalen Taschen mit endlicher Länge und geschlossenem Umfangsrand entsteht. Diese können bei bestimmungsmäßiger Verwendung der bearbeiteten Werkstückoberfläche als Schmiermittelreservoir dienen.

Anhand von Fig. 7 wird eine Verfahrensvariante erläutert, bei der mit Hilfe eines um seine Werkzeugachse rotierenden Rollprägewerkzeugs die konvex zylindrische Außenfläche 710 eines Werkstücks 700 bearbeitet wird, um eine Rollprägestruktur 758 zu erzeugen. Das Bearbeitungswerkzeug kann ähnlich wie ein Außenhonwerkzeug aufgebaut sein, wobei jedoch die radial nach innen zustellbaren Honleisten durch Trägerelemente ersetzt sind, die jeweils ein oder mehrere Wälzelemente 780 mit einem rauen Arbeitsabschnitt tragen.

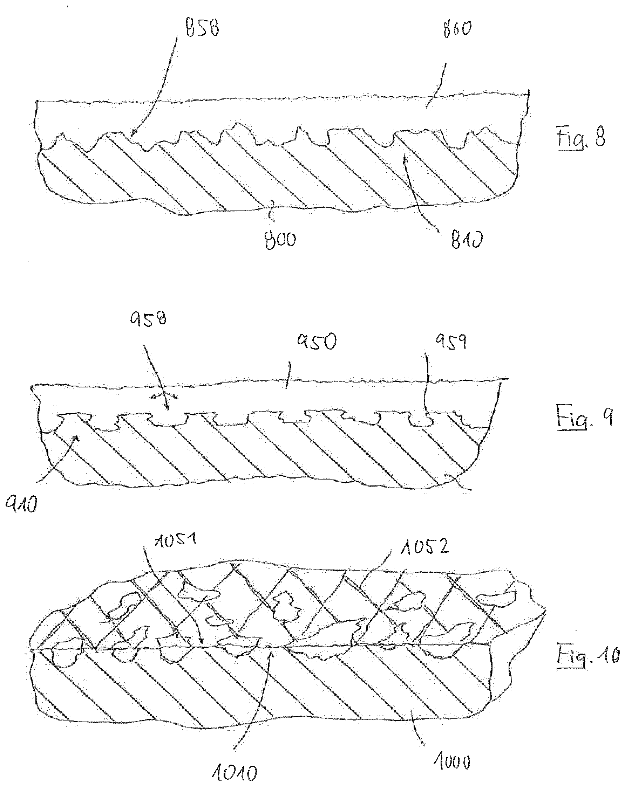

In Fig. 8 ist ein schematischer Schnitt durch ein Werkstück 800 aus einem Aluminiumwerkstoff im Bereich einer gekrümmten Werkstückoberfläche 810 gezeigt. Das Werkstück 800 ist im Beispielsfall eine aus einer Aluminiumlegierung hergestellte Zylinderhülse, deren Innenfläche nach Abschluss der Bearbeitung als Zylinderlauffläche eines Verbrennungsmotors dienen soll. Das Herstellverfahren umfasst eine mehrstufige Vorbearbeitung der Innenfläche der Zylinderhülse inklusive einem abschließenden Honbearbeitungsschritt, durch den die Bohrungsinnenfläche bis auf ein geringes Übermaß die richtige Makroform und Dimension erhält. Ähnlich wie anhand von Fig. 5 beschrieben, wird die gehonte Ausgangsstruktur dann mittels Rollprägen in eine raue Rollprägestruktur 858 umgeformt, die im Beispielsfall eine mittlere Rautiefe zwischen 30 µm und ca. 100 µm hat. Die Rollprägeoperation erfolgt ohne Zuhilfenahme von Kühlschmierstoff oder dergleichen, also in einem trockenen Verfahren.

Unmittelbar nach dem Rollprägen ist die Rollprägestruktur ohne weitere Behandlung fertig für eine nachfolgende Beschichtung mittels thermischen Spritzens. Im Beispielsfall wird mit Hilfe eines Flammspritzverfahrens eine eisenhaltige Beschichtung 860 direkt auf die Rollprägestruktur 858 aufgebracht. Durch die Rauheit der Rollprägestruktur verzahnt sich das Beschichtungsmaterial gut mit dem metallischen Basismaterial des Werkstücks, so dass eine feste Haftung zwischen Werkstück und Beschichtung entsteht. Die nach dem thermischen Spritzen relativ raue Oberfläche der Beschichtung kann dann einer mechanischen Nachbearbeitung, beispielsweise durch Honen, unterzogen werden, um die gewünschte Endrauhigkeit der Oberfläche sowie das gewünschte Endmaß zu erzeugen.

In Fig. 9 ist ein schematischer Schnitt durch eine Zylinderhülse 900 im Bereich ihrer Innenfläche 910 gezeigt, nachdem diese mit einer Variante des oben beschriebenen Verfahrens hergestellt wurde. Wie im Beispielsfall von Fig. 8 wurde nach einer Vorbearbeitung zunächst eine Rollprägeoperation durchgeführt. Dadurch entstand die in Fig. 8 schematisch gezeigte irreguläre Rollprägestruktur mit stochastisch verteilten Erhöhungen und Vertiefungen. Danach wurden in einer weiteren trockenen Bearbeitungsoperation die Spitzen der Erhebungen mit Hilfe eines Wälzelementes mit glatter Außenfläche plattgedrückt, um durch Materialumformung eine Plateaustruktur an den Erhebungen zu erzeugen. Bei der Materialumformung wurde bei einigen der Erhebungen so viel Material zur Seite gedrängt, dass seitlich an den Erhebungen lateral vorspringenden Nasen 959 entstehen. Wird nun die hierdurch erzeugte modifizierte Rollprägestruktur 958 mittels thermischen Spritzens beschichtet, so kann sich das in die Vertiefungen gelangende Schichtmaterial formschlüssig im Bereich der lateralen Nasen 959 mit der Rollprägestruktur verhaken, wodurch eine verbesserte Schichthaftung erreicht werden kann. Dies hat u.a. den Vorteil, dass weniger Material zum Aufspritzen benötigt wird, da die entstandenen Erhöhungen nicht mehr durch Aufspritzen eingeebnet werden müssen. Ähnlich wie bei dem Beispiel von Fig. 8 kann die Oberfläche der Beschichtung 850 nach Abschluss des Beschichtungsverfahrens mechanisch nachbearbeitet werden, um z.B. durch Honen eine endbearbeitete Oberfläche mit dem gewünschten Maß und der gewünschten Oberflächenstruktur zu erhalten. Die Rollprägeoperation und die nachfolgende nicht-abrasive Glättoperation können ggf. mit dem gleichen Bearbeitungswerkzeug (mit Doppelzustellung) durchgeführt werden. Dieses kann ähnlich wie in Fig. 3 aufgebaut sein, wobei jedoch anstelle der Honleisten nicht-abrasive Glättelemente in Form von glatten Walzen oder Glättleisten mit glatter harter Außenfläche vorgesehen sind.

Bei dem anhand von Fig. 10 erläuterten Bearbeitungsverfahren wird zunächst, ähnlich wie bei den Verfahren von Fig. 8 oder Fig. 9, an der gekrümmten Werkstückoberfläche 1010 des Werkstücks 1000 eine Rollprägestruktur mit stochastisch verteilten Vertiefungen und Erhöhungen erzeugt. Unmittelbar danach wird die so entstandene Rollprägestruktur mit Hilfe relativ feinkörniger Honleisten plateaugehont. Bei dieser Bearbeitungsstufe werden die am weitesten nach außen ragenden Spitzen der Rollprägestruktur abgetragen, so dass sich zwischen den Vertiefungen Plateaus 1051 mit einer durch Honen strukturierten relativ flachen Oberfläche mit feinen Honriefen 1052 ergeben. Derart bearbeitete Oberflächen haben gegenüber reinen Rollprägestrukturen einen erhöhten Traganteil und können unmittelbar als Gleitpartner für Kolbenringe dienen.

Die für die endgültige Oberflächenstruktur maßgeblichen Operationen (Rollprägeoperationen und nachfolgende Plateauhonoperation) können ggf. mit dem gleichen Bearbeitungswerkzeug erzeugt werden, das beispielsweise wie dass Bearbeitungswerkzeug von Fig. 3 aufgebaut sein kann. Das Werkstück kann beispielsweise aus Graugussmaterial oder einem Leichtmetallwerkstoff, wie einem Aluminiumbasiswerkstoff, bestehen.

Nachfolgend werden weitere Ausführungsbeispiele von Bearbeitungswerkzeugen zum Rollprägen beschrieben, die im Rahmen des Bearbeitungsverfahrens genutzt werden können.

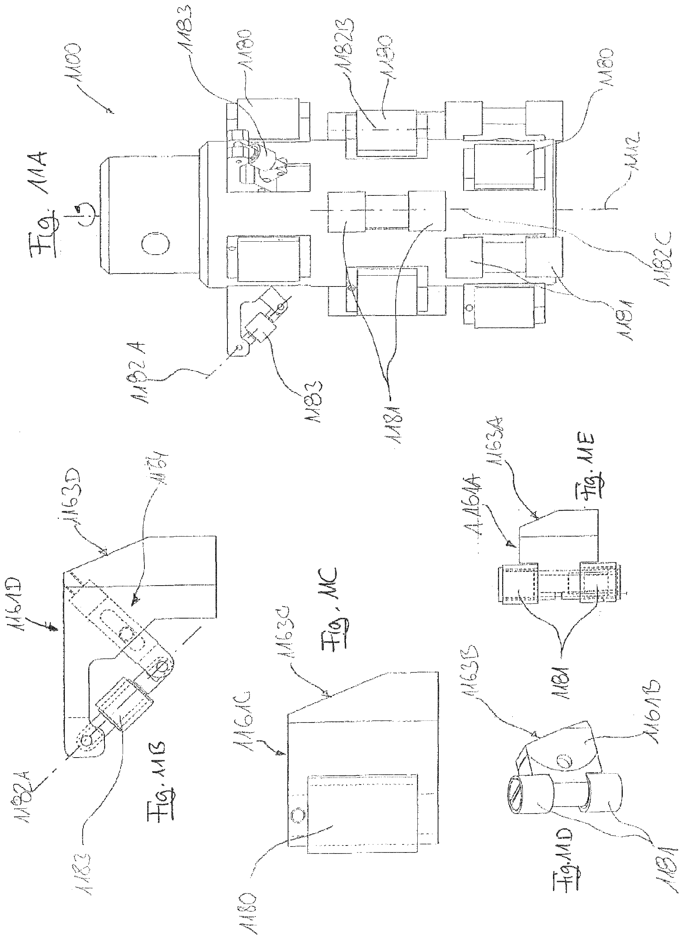

Fig. 11A zeigt in Seitenansicht eine weitere Ausführungsform eines Bearbeitungswerkzeugs 1100 mit mehreren Wälzelementen 1180, 1181 und 1183. Die Wälzelemente 1180 haben jeweils nur ein Wälzelementsegment, das um eine parallel zur Werkzeugachse 1112 verlaufende und exzentrisch zu dieser liegende Wälzelementachse 1182B drehbar gelagert ist, und sind in einer Werkzeuglängsrichtung, welche parallel zur Werkzeugachse 1112 verläuft, übereinander verteilt am Werkzeugkörper angeordnet. Die exzentrischen Wälzelemente 1180 sind dabei in Umfangsrichtung versetzt angeordnet, so dass ihre Wälzelementachsen 1182B nicht konzentrisch verlaufen.

Die Wälzelemente 1181 weisen auch jeweils eine parallel zur Werkzeugachse 1112 verlaufende Wälzelementachse 1182C auf, welche ebenfalls außerhalb der Werkzeugachse liegt. Diese Wälzelemente 1181 haben jedoch zwei Wälzelementsegmente, ein oberes und ein unteres, welche jeweils separat drehbar gelagert sind.

Das Bearbeitungswerkzeug 1100 weist ferner Wälzelemente 1183 auf, welche im oberen Drittel des Bearbeitungswerkzeugs angeordnet sind und ebenfalls um eine Wälzelementachse 1182A drehbar gelagert sind. Die Wälzelementachse 1182A verläuft jedoch im Gegensatz zu den Wälzelementachsen 1182B und 1182C nicht parallel zur Werkzeugachse 1112, sondern schräg zu dieser und in radialer Richtung. Der zwischen der Wälzelementachse 1182A und der Werkzeugachse 1112 gemessene Anstellwinkel beträgt ca. 45°, er kann auch kleiner oder größer sein und z.B. zwischen 30° und 60° liegen.

Das in Fig. 11A dargestellte Bearbeitungswerkzeug eignet sich insbesondere zur Bearbeitung von Innenflächen von zylindrischen Bohrungen, deren Innendurchmesser im wesentlichen dem Außendurchmesser des Bearbeitungswerkzeugs 1100 entspricht, wobei die achsparallel drehenden Wälzelemente 1180 und 1181 zur Bearbeitung Innenfläche der Bohrung vorgesehen sind. Mit den schräg angeordneten Wälzelementen 1183 kann gleichzeitig eine obere Fase der Bohrung, beispielsweise eine Einführfase, bearbeitet werden. Rollen die Wälzelemente 1183 auf der Fasenoberfläche ab, entsteht ebenfalls die Rollprägestruktur. Mit einem solchen Bearbeitungswerkzeug kann ohne einen zusätzlichen Fertigungsschritt bzw. ohne ein zusätzliches Bearbeitungswerkzeug die Beschichtungsqualität der Fase ebenfalls verbessert werden. Die Wälzelemente 1183 können zum Ausgleich von Form- und Lagetoleranzen bzw. Form- und Lagefehlern auch federnd abgestützt sein.

In den Fig. 11B, 11C und 11E sind die unterschiedlichen Wälzelemente 1180, 1181 und 1183 aus Fig. 11A schematisch in vergrößerter Darstellung abgebildet. Fig. 11B zeigt in einer Seitenansicht das an einem Trägerelement 1161D gelagerte schräge Wälzelement 1183. Mittels einer Verstelleinrichtung 1164 kann die Neigung der Wälzelementachse 1182A verstellt werden und zur Optimierung der Rollprägeoperation an unterschiedliche Fasenwinkel angepasst werden. Zur Zustellung des Wälzelementes 1183 in radialer Richtung hat das Trägerelement 1161D eine schräge Fläche 1163D, welche dazu dient, das Verschieben eines hier nicht dargestellten Keils in Längsrichtung des Bearbeitungswerkzeugs in eine radiale Zustellbewegung des Trägerelements mit dem Wälzelement 1183 umzuwandeln.
Fig. 11C zeigt das Wälzelement 1180, das um seine Wälzelementachse drehbar an einem Trägerelement 1161C gelagert ist, welches ebenfalls eine schräge Fläche 1163C hat, um eine radiale Wälzelement-Zustellung durch Verschieben durch einen in Werkzeuglängsrichtung verschiebbaren Keil zu ermöglichen.

In Fig. 11D ist in perspektivischer Darstellung das Wälzelement 1181 dargestellt mit seinen zwei Wälzelement-Segmenten, die jeweils koaxial übereinander mit Abstand zueinander angeordnet sind und ebenfalls drehbar um ihre Wälzelementachse an einem Trägerelement 1161B angeordnet sind. Auch dieses Trägerelement 1161B hat an seiner Innenseite eine schräge Fläche 1163B für eine radiale Wälzelement-Zustellung. Fig. 11E zeigt das Wälzelement 1181 aus Fig. 11D zusätzlich in einer Seitenansicht.

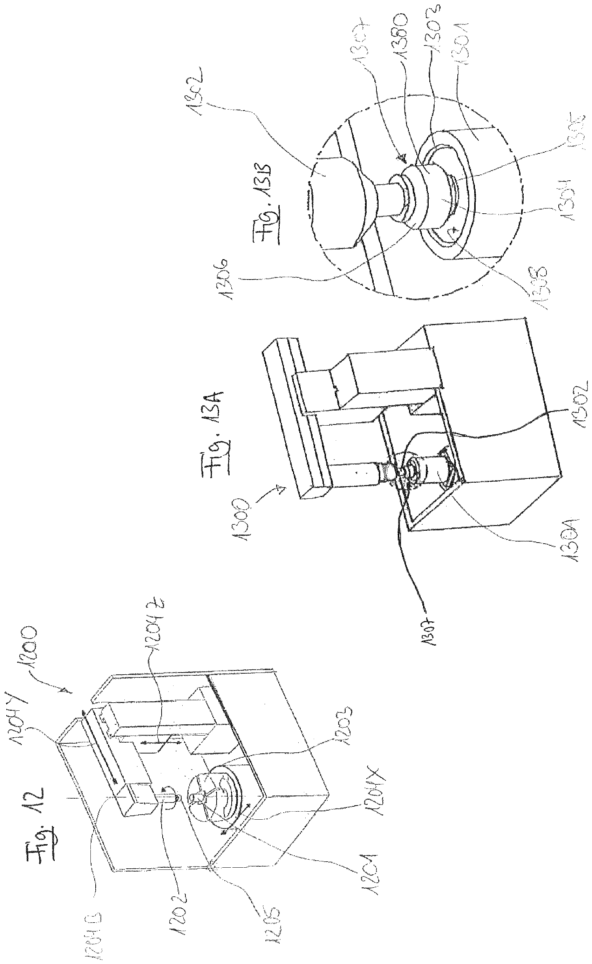

Fig. 12 zeigt in schräg perspektivischer Darstellung ein 4-Achs-Bearbeitungszentrum 1200 aus dem Stand der Technik, mit dem ein hier nicht dargestelltes Bearbeitungswerkzeug entlang einer nahezu beliebigen, vordefinierten Bahn innerhalb des Bereich der Achsen 1204X, 1204Y, 1204Z sowie 1204B geführt bzw. bewegt werden kann. Dazu kann das Bearbeitungswerkzeug an einer Spindel 1202 in einer Werkzeugaufnahme 1205 befestigt werden. Zur Aufnahme des zu bearbeitenden Werkstücks 1201 ist ein drehbeweglicher Rundtisch 1203 vorgesehen.

Fig. 13 zeigt das Bearbeitungszentrum aus Fig. 12 mit einem Ausführungsbeispiel eines Bearbeitungswerkzeugs 1307 sowie das zu bearbeitende Werkstück 1301. Fig. 13B zeigt einen vergrößerten Ausschnitt auf das Bearbeitungswerkzeug 1307 sowie auf den oberen Bereich des Werkstücks 1301 mit einer zu bearbeitenden Innenfläche 1308 und einer Fase 1303 einer zylindrischen Bohrung. Das Bearbeitungswerkzeug 1307 hat ein einziges Wälzelement 1380 mit einer zylindermantelförmigen Außenfläche 1304 sowie zwei an die Außenfläche 1304 nach oben bzw. unten unmittelbar angrenzenden konischen Außenflächen 1305 und 1306. Die Wälzelementachse des einzigen Wälzelements 1380 ist konzentrisch zur Werkzeugachse angeordnet.

Das Bearbeitungswerkzeug 1307 ist mittels einer geeigneten Kopplungsstruktur an die Spindel 1302 des Bearbeitungszentrums 1300 angekoppelt. Die Spindel dreht sich bei der Bearbeitung nicht. Der Außendurchmesser des Bearbeitungswerkzeugs 1307 ist deutlich kleiner als der Innendurchmesser der zu bearbeitenden Bohrung, z.B. mindestens 10% oder mindestes 20° kleiner. Zum Bearbeiten der Innenfläche 1308 wird das Bearbeitungswerkzeug 1307 durch Ansteuerung der Achsantriebe des Bearbeitungszentrums so auf einer vordefinierten Bahn geführt, dass die Außenflächen 1304, 1305, 1306 des Wälzelements 1380 mit ihrer rauen Oberflächenstruktur auf den zu bearbeitenden Werkstückoberflächen (zylindrische Innenfläche und Fase) abrollen und die gewünschte Rollprägestruktur entsteht. Über den Bahnverlauf kann der Anpressdruck des Wälzelementes 1380 gesteuert bzw. geregelt werden. Die zylindrische Außenfläche 1304 ist zur Bearbeitung der senkrechten verlaufenden Innenfläche 1308 vorgesehen, wähhrend die untere, an der spindelabgewandten Seite der Außenfläche 1304 angeordnete konische Außenfläche 1305 zur Bearbeitung der oberen Fase 1303 vorgesehen ist. Mittels der oberen konischen Außenfläche 1306 kann eine an einer hier nicht dargestellten Unterseite des Werkstücks 1301 vorhandene Fase bearbeitet werden. Alle Flächen können in einer Aufspannung ohne Werkzeugwechsel nacheinander bearbeitet werden.

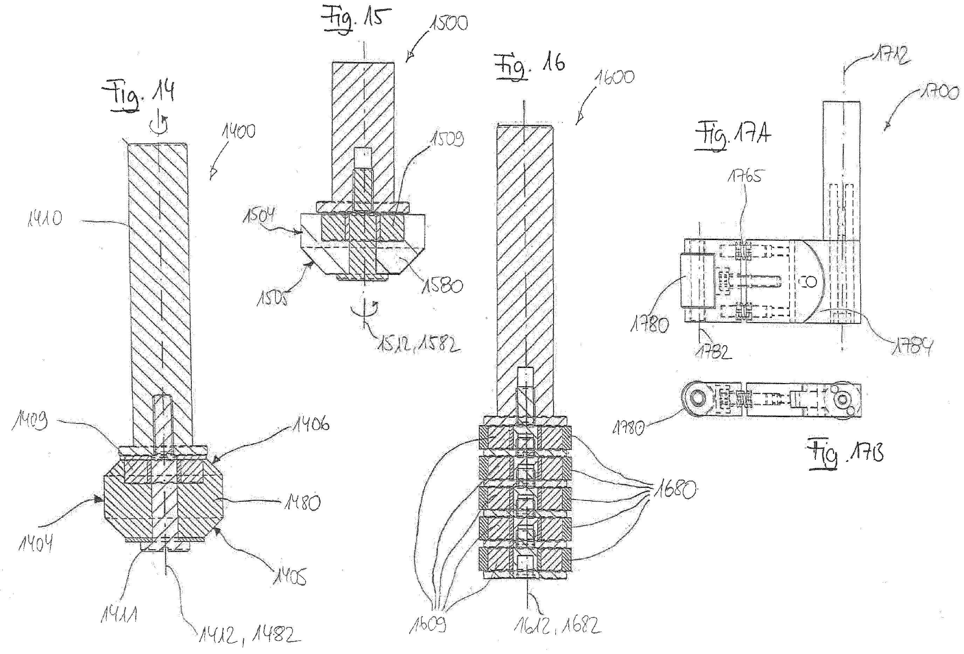

Fig. 14 zeigt in einer Schnittdarstellung beispielhaft ein Bearbeitungswerkzeug 1400 als Ausführungsbeispiel eines in Fig. 13 dargestellten Bearbeitungswerkzeugs 1307. Das einzige Wälzelement 1480 ist mittels mindestens eines Lagers 1409 um die Wälzelementachse 1482 drehbar gelagert, welche konzentrisch zur Werkzeugachse 1412 angeordnet ist. Das Lager ist mittels einer Schraube 1411 an einem zylindrischen Kopplungselement 1410 befestigt. Das Kopplungselement 1410 ist zur Verbindung mit der Spindel eines Bearbeitungszentrums oder eines Honwerkzeugs oder dergleichen vorgesehen und wird dort fest eingespannt. Das Wälzelement des Bearbeitungswerkzeugs 1400 hat eine mittlere zylindermantelförmige Außenfläche 1404 sowie zwei daran nach oben bzw unten (bzw. in Achsrichtung) unmittelbar angrenzende konische Außenflächen 1406 und 1405- Mit zunehmendem Abstand von der Außenfläche 1404 verjüngen sich die konischen Außenflächen 1405 und 1406 mit einem Konuswinkel zwischen 40° und 50°, wobei sie in einem Übergangsbereich zu der dazwischen liegenden zylindrischen Außenfläche 1404 den gleichen Außendurchmesser aufweisen wie diese. Denkbar sind aber auch von der Außenfläche 1404 abgesetzte konische Außenflächen.

Fig. 15 zeigt eine ähnliche Ausführungsform eines Bearbeitungswerkzeugs 1500. Dieses Bearbeitungswerkzeug weist jedoch nur eine konische Außenfläche 1505 an der spindelabgewandten Seite der Außenfläche 1504 auf. Mit diesem Bearbeitungswerkzeug 1500 können daher bei senkrecht verlaufenden Bohrungen in einer Werkzeugaufspannung neben der zylindrischen Bohrungsinnenfläche nur die oberseitigen Fasen bearbeitet werden.

Fig. 16 zeigt, ebenfalls in Schnittdarstellung, eine andere Ausführungsform eines Bearbeitungswerkzeugs, welche mehrere koaxial übereinander angeordnete Wälzelemente 1680 hat, deren Wälzelementachsen 1682 alle konzentrisch zur Werkzeugachse 1612 verlaufen. Sämtliche Wälzelemente 1680 sind jeweils mittels eines Lagers 1609 drehbar um die Wälzelementachse 1682 gelagert. Das modular aufgebaute Werkzeug ist einfach an unterschiedliche Bohrungslängen anpassbar.

Fig. 17 zeigt in Fig. 17A in Seitenansicht eine Ausführungsform eines exzentrischen Bearbeitungswerkzeugs 1700 mit einem L-förmigen Werkzeugkörper 1711, dessen einer Schenkel die Werkzeugachse 1712 bildet. An einem dem Winkel abgewandten Ende des anderen Schenkel ist ein Wälzelement 1780 angeordnet, das drehbar um die Wälzelementachse 1782 gelagert ist, Mittels der Federn 1765 wird zwischen dem Wälzelement 1780 und dem Werkzeugkörper 1784 eine elastische Anbindung erreicht, die einen Toleranzausgleich ermöglicht. Aus Fig. 17B ist ersichtlich, dass es sich nicht um einen rotationssymmetrischen Werkzeugkörper 1784 handelt.

Einige Ausführungsbeispiele von Bearbeitungsverfahren mit einer Rollprägeoperation wurden am Beispiel der Bearbeitung von gekrümmten Werkstückoberflächen im Bereich von Zylinderbohrungen erläutert, um tribologisch hoch beanspruchbare Zylinderlaufflächen zu erhalten. Die Verfahren können jedoch auch bei anderen Werkstücken genutzt werden. Beispielsweise ist auch die Innenbearbeitung von Bohrungen im kleinen oder großen Pleuelauge unter Verwendung von Rollprägeoperationen möglich. Beispielsweise kann das kleine Pleuelauge zunächst durch Rollprägen bearbeitet und anschließend die mit Rollprägestruktur versehene Innenfläche mit einer Beschichtung aus einem Lagermaterial belegt werden. Alternativ kann die raue Rollprägestruktur als Verdrehsicherung für eine eingelegte Lagerschale dienen, deren Außenfläche ggf. ebenfalls mittels Rollprägen aufgeraut sein kann.

Mittels des beispielhaft erläuterten bahngeführten Bearbeitungsverfahrens können auch nichtzylindrische Ausnehmungen, beispielsweise die Kolbenlaufflächen eines Wankelmotorgehäuses, durch Rollprägen bearbeitet werden. Ferner können ggf. nicht nur gekrümmte, sondern auch plane bzw. ebene Bereiche von Werkstückoberflächen auf diese Weise einer Rollprägeoperation unterzogen werden.

## Patentansprüche

1. Bearbeitungsverfahren zum Bearbeiten einer gekrümmten Werkstückoberfläche eines Werkstücks, insbesondere zum Bearbeiten der Innenfläche einer Bohrung in einem Werkstück, **gekennzeichnet durch** eine Rollprägeoperation, bei der mindestens ein Wälzelement (180, 380) eines Bearbeitungswerkzeugs an einem zu bearbeitenden Abschnitt der gekrümmten Werkstückoberfläche (810) unter einem Anpressdruck abgerollt wird,
wobei eine Außenfläche des Wälzelements in mindestens einem für einen Abrollkontakt mit der Werkstückoberfläche bestimmten zylindrischen Arbeitsabschnitt (190) eine raue Oberflächenstruktur mit gemäß einer unregelmäßigen Verteilung vorliegenden Erhöhungen und gegenüber den Erhöhungen tiefer liegenden Vertiefungen aufweist und
wobei der Anpressdruck so eingestellt wird, dass beim Abrollen durch lokales Umformen von Werkstückmaterial im Bereich der Werkstückoberfläche eine raue Rollprägestruktur (858) mit stochastisch verteilten Erhöhungen und Vertiefungen und einer mittleren Rauhtiefe Rz im Bereich zwischen Rz = 30 µm und Rz = 100 µm erzeugt wird,
wobei nach der Rollprägeoperation auf die Werkstückoberfläche (810) eine Beschichtung (860) aufgebracht wird, wobei die Beschichtung ohne eine die Form der Rollprägestruktur (858) verändernde Nachbearbeitung unmittelbar auf die durch die Rollprägeoperation erzeugte raue Rollprägestruktur (858) aufgebracht wird.

2. Bearbeitungsverfahren nach einem der vorhergehenden Ansprüche, **dadurch gekennzeichnet, dass** die Beschichtung (860) durch thermisches Spritzen aufgebracht wird.

3. Bearbeitungsverfahren nach einem der vorhergehenden Ansprüche, worin während und/oder nach der Rollprägeoperation eine die Form der Rollprägestruktur (858) nicht verändernde Reinigung der Werkstückoberfläche durchgeführt wird, insbesondere zur Beseitigung von durch die Rollprägeoperation erzeugten, nicht oder nur schwach an der Werkstückoberfläche gebundene Werkstoffpartikeln, wobei die Rollprägestruktur bei der Reinigung vorzugsweise trocken gereinigt, insbesondere mittels relativ weicher nicht-abrasiver Bürsten gebürstet und/oder pneumatisch freigeblasen wird, und/oder worin während und/oder nach der Rollprägeoperation eine Absaugung von Bearbeitungsrückständen der Rollprägeoperation erfolgt, wobei vorzugsweise zusätzlich zur Absaugung die Werksstückoberfläche freigeblasen wird.

4. Bearbeitungsverfahren nach einem der vorhergehenden Ansprüche, **dadurch gekennzeichnet, dass** das mindestens eine Wälzelement (1380) des Bearbeitungswerkzeugs (1307) an dem zu bearbeitenden Abschnitt der gekrümmten Werkstückoberfläche (1308) unter Anpressdruck abgerollt wird, indem das Bearbeitungswerkzeug in einem vordefinierten Abstand zur Werkstückoberfläche entlang einer vordefinierten Bahn geführt wird, wobei ein Verlauf der vordefinierten Bahn des Bearbeitungswerkzeugs vorzugsweise von der Krümmung der Werkstückoberfläche sowie von dem erforderlichen Anpressdruck abhängig ist.

5. Bearbeitungsverfahren nach einem der Ansprüche 1 bis 4, **dadurch gekennzeichnet, dass** zur Bearbeitung der Innenfläche einer Bohrung, insbesondere einer zylindrischen Bohrung, das Abrollen des mindestens einen Wälzelementes bewirkt wird, indem ein, vorzugsweise im wesentlichen bohrungsausfüllendes, Bearbeitungswerkzeug (100) verwendet wird, das als Rotationswerkzeug ausgebildet ist und um die Werkzeugachse (112) drehend angetrieben wird.

6. Bearbeitungswerkzeug zum Bearbeiten einer gekrümmten Werkstückoberfläche eines Werkstücks, insbesondere zum Bearbeiten der Innenfläche einer Bohrung in einem Werkstück bei einem Bearbeitungsverfahren nach einem der vorhergehenden Ansprüche, mit:
einem Werkzeugkörper (110, 310), der eine Werkzeugachse (112, 312) definiert, und
mindestens einem durch den Werkzeugkörper getragenen Wälzelement (180, 380), das um eine Wälzelementachse (182) drehbar ist und eine Außenfläche aufweist,
**dadurch gekennzeichnet, dass**
die Außenfläche in mindestens einem für einen Abrollkontakt mit der Werkstückoberfläche bestimmten zylindrischen Arbeitsabschnitt (190) eine raue Oberflächenstruktur mit gemäß einer unregelmäßigen Verteilung vorliegenden Erhöhungen und gegenüber den Erhöhungen tiefer liegenden Vertiefungen aufweist,
wobei das Wälzelement einen Wälzelementkörper (184) aufweist, der im Arbeitsabschnitt eine Beschichtung (192) mit einer rauen Oberflächenstruktur trägt, wobei die Beschichtung (192) eine Vielzahl von in einer Bindung (196) gebundenen Hartstoffkörnern (194) aufweist und eine mittlere Korngröße der Hartstoffkörner im Bereich von 30 µm bis 250 µm liegt.

7. Bearbeitungswerkzeug nach Anspruch 6, **dadurch gekennzeichnet, dass** die Wälzelementachse (1482) mindestens eines Wälzelements (1480) konzentrisch zur Werkzeugachse (1412) verläuft oder dass die Wälzelementachse (182, 1182B, 1182C) mindestens eines Wälzelements außerhalb der Werkzeugachse (112, 312, 1112) liegt.

8. Bearbeitungswerkzeug nach einem der Ansprüche 6 bis 7, **dadurch gekennzeichnet, dass** die Wälzelementachse mindestens eines Wälzelements parallel zur Werkzeugachse verläuft und/oder dass die Wälzelementachse (1183A) mindestens eines Wälzelements (1183) radial nach außen und schräg zur Werkzeugachse (1112) verläuft.

9. Bearbeitungswerkzeug nach einem der Ansprüche 6 bis 8, **dadurch gekennzeichnet, dass** mindestens ein Wälzelement (1480) eine zylindermantelförmige Außenfläche (1404) mit einer rauen Oberflächenstruktur und mindestens eine an diese Außenfläche angrenzende konische Außenfläche (1405, 1406) mit einer rauen Oberflächenstruktur aufweist.

10. Bearbeitungswerkzeug nach einem der Ansprüche 6 bis 9, worin am Werkzeugkörper mindestens ein relativ zum Werkzeugkörper radial zur Werkzeugachse bewegliches Trägerelement (160, 460, 1161D) angeordnet ist und das Wälzelement an dem Trägerelement gelagert ist, wobei das Wälzelement vorzugsweise elastisch nachgiebig am Trägerelement gelagert ist.

11. Bearbeitungswerkzeug nach einem der Ansprüche 6 bis 10, **gekennzeichnet durch** ein Wälzelement-Zustellsystem zur variabel steuerbaren Zustellung des Wälzelements in einer radial zur Werkzeugachse (112, 312, 1112) verlaufenden Zustellrichtung.

12. Bearbeitungswerkzeug nach einem der Ansprüche 6 bis 11, worin am Werkzeugkörper (110) mehrere, insbesondere drei, um den Umfang verteilte Wälzelemente (180A, 180B, 180C) angeordnet sind und/oder worin am Werkzeugkörper mehrere in einer Werkzeuglängsrichtung verteilte Wälzelemente (1180, 1181, 1182) angeordnet sind.

13. Bearbeitungswerkzeug nach einem der Ansprüche 6 bis 12, worin das Bearbeitungswerkzeug (300) zusätzlich zu mehreren um den Umfang des Bearbeitungswerkzeugs verteilten Wälzelementen (380) einen Satz von mehreren um den Umfang des Bearbeitungswerkzeugs verteilten weiteren Bearbeitungselementen aufweist, die unabhängig von den Wälzelementen radial zustellbar sind, wobei die weiteren Bearbeitungselemente vorzugsweise Honleisten (390) oder Glättelemente sind.

14. Bearbeitungswerkzeug nach einem der Ansprüche 6 bis 13, worin der Werkzeugkörper eine Kupplungsstruktur zum Ankoppeln des Bearbeitungswerkzeugs an eine Arbeitsspindel (150) einer Honmaschine aufweist oder worin der Werkzeugkörper eine Kupplungsstruktur zum Ankoppeln des Bearbeitungswerkzeuges an die Arbeitsspindel eines Bearbeitungszentrums aufweist.

15. Verwendung eines Bearbeitungswerkzeuges nach einem der Ansprüche 6 bis 14 bei einem Bearbeitungsverfahren nach einem der Ansprüche 1 bis 5.

## Claims

1. Machining method for machining a curved workpiece surface of a workpiece, in particular for machining the internal surface of a bore in a workpiece, **characterized by** a roll-embossing operation, in which at least one rolling element (180, 380) of a machining tool is rolled under a contact pressure against a section to be machined of the curved workpiece surface (810),
wherein an external surface of the rolling element has a rough surface structure in at least one cylindrical working section (190) intended for rolling contact with the workpiece surface, the surface structure having, in an irregular distribution, elevations and depressions set back from the elevations, and
wherein the contact pressure is set in such a manner that, during the rolling, a rough roll-embossed structure (858) is produced by local deformation of workpiece material in the region of the workpiece surface with stochastically distributed elevations and depressions and an average peak to valley height Rz in the range of between Rz = 30 µm and Rz = 100 µm is generated,
wherein, after the roll-embossing operation, a coating (860) is applied to the workpiece surface (810), wherein the coating is applied directly onto the rough roll-embossed structure (858) produced by the roll-embossing operation without a post-treatment changing the shape of the roll-embossed structure (858).

2. Machining method according to any of the preceding claims, **characterized in that** the coating (860) is applied by thermal spraying.

3. Machining method according to any of the preceding claims, wherein, during and/or after the roll-embossing operation, cleaning of the workpiece surface is carried out, the cleaning not changing the shape of the roll-embossed structure (858), in particular for eliminating material particles which are produced by the roll-embossing operation and are bound only weakly, if at all, to the workpiece surface, wherein, during the cleaning, the roll-embossed structure is preferably cleaned dry, in particular is brushed by means of relatively soft, non-abrasive brushes and/or is pneumatically blown clear, and/or wherein, during and/or after the roll-embossing operation, machining residues from the roll-embossing operation are extracted by suction, wherein preferably, in addition to the extraction by suction, the workpiece surface is blown clear.

4. Machining method according to any of the preceding claims, **characterized in that** the at least one rolling element (1380) of the machining tool (1307) is rolled under contact pressure against the section to be machined of the curved workpiece surface (1308), **in that** the machining tool is guided at a predefined distance from the workpiece surface along a predefined path, wherein a course of the predefined path of the machining tool is preferably dependent on the curvature of the workpiece surface and on the required contact pressure.

5. Machining method according to any of claims 1 to 4, **characterized in that**, in order to machine the internal surface of a bore, in particular a cylindrical bore, rolling of the at least one rolling element is brought about by use being made of a preferably substantially bore-filling machining tool (100) which is designed as a rotation tool and is driven in a rotating manner about the tool axis (112).

6. Machining tool for machining a curved workpiece surface of a workpiece, in particular for machining the internal surface of a bore in a workpiece with a machining method according to any of the preceding claims, comprising:
a tool body (110, 310) which defines a tool axis (112, 312), and
at least one rolling element (180, 380) which is carried by the tool body, is rotatable about a rolling element axis (182) and has an external surface,
**characterized in that**
the external surface has a rough surface structure in at least one cylindrical working section (190) intended for rolling contact with the workpiece surface, the surface structure having, in an irregular distribution, elevations and depressions set back from the elevations,
wherein the rolling element has a rolling element body (184) which, in the working section, bears a coating (192) having a rough surface structure, wherein the coating (192) has a multiplicity of hard material grains (194) bound in a binding (196), and an average grain size of the hard material grains is within the range of 30 µm to 250 µm.

7. Machining tool according to claim 6, **characterized in that** the rolling element axis (1482) of at least one rolling element (1480) runs concentrically with respect to the tool axis (1412), or that the rolling element axis (182, 1182B, 1182C) of at least one rolling element lies outside the tool axis (112, 312, 1112).

8. Machining tool according to any of claims 6 to 7, **characterized in that** the rolling element axis of at least one rolling element runs parallel to the tool axis, and/or **in that** the rolling element axis (1183A) of at least one rolling element (1183) runs radially outward and obliquely with respect to the tool axis (1112).

9. Machining tool according to any of claims 6 to 8, **characterized in that** at least one rolling element (1480) has a cylinder-jacket-shaped external surface (1404) having a rough surface structure and at least one conical external surface (1405, 1406) which is adjacent to said external surface and has a rough surface structure.

10. Machining tool according to any of claims 6 to 9, wherein at least one carrier element (160, 460, 1161D) which is movable relative to the tool body radially to the tool axis is arranged on the tool body, and the rolling element is mounted on the carrier element, wherein the rolling element is preferably mounted in an elastically flexible manner on the carrier element.

11. Machining tool according to any of claims 6 to 10, **characterized by** a rolling element infeed system for the variably controllable infeed of the rolling element in an infeed direction running radially to the tool axis (112, 312, 1112).

12. Machining tool according to any of claims 6 to 11, wherein a plurality of rolling elements (180A, 180B, 180C), in particular three rolling elements, are arranged distributed around the circumference of the tool body (110), and/or wherein a plurality of rolling elements (1180, 1181, 1182) distributed in a longitudinal direction of the tool are arranged on the tool body.

13. Machining tool according to any of claims 6 to 12, wherein, in addition to a plurality of rolling elements (380) distributed around the circumference of the machining tool, the machining tool (300) has a set of a plurality of further machining elements which are distributed around the circumference of the machining tool and can be infed radially independently of the rolling elements, wherein the further machining elements are preferably honing sticks (390) or smoothing elements.

14. Machining tool according to any of claims 6 to 13, wherein the tool body has a coupling structure for coupling the machining tool onto a working spindle (150) of a honing machine, or wherein the tool body has a coupling structure for coupling the machining tool onto the working spindle of a machining center.

15. Use of a machining tool according to any of claims 6 to 14 with a machining method according to any of claims 1 to 5.

## Revendications

1. Procédé de traitement destiné à traiter une surface incurvée d'une pièce, en particulier à traiter la surface intérieure d'un alésage ménagé dans une pièce, **caractérisé par** une opération de gaufrage au rouleau dans laquelle au moins un élément roulant (180, 380) d'un outil de traitement est mis à rouler sous une pression de contact sur une portion à traiter de la surface incurvée de la pièce (810),
une surface extérieure de l'élément roulant dans au moins une portion de travail cylindrique (190) destinée à venir en contact de roulement avec la surface de la pièce comportant une structure de surface rugueuse comportant des élévations, présentes selon une distribution irrégulière, et des creux plus profonds que les élévations et
la pression de contact étant réglée de telle manière à générer une structure de gaufrage au rouleau rugueuse (858), comportant des élévations et des creux distribués de manière stochastique et une profondeur de rugosité moyenne Rz dans la gamme comprise entre Rz = 30 µm et Rz = 100 µm, lors du roulement par mise en forme locale du matériau de la pièce dans la zone de la surface de la pièce,
un revêtement (860) étant appliqué sur la surface (810) de la pièce après l'opération de gaufrage au rouleau, le revêtement étant appliqué directement sur la structure de gaufrage au rouleau rugueuse (858), générée par l'opération de gaufrage au rouleau, sans post-traitement qui modifie la forme de la structure de gaufrage au rouleau (858).

2. Procédé de traitement selon l'une des revendications précédentes, **caractérisé en ce que** le revêtement (860) est appliqué par projection thermique.

3. Procédé de traitement selon l'une des revendications précédentes, dans lequel un nettoyage de la surface de la pièce, ne modifiant pas la forme de la structure de gaufrage au rouleau (858), est effectué pendant et/ou après l'opération de gaufrage au rouleau, en particulier pour éliminer des particules de matière produites par l'opération de gaufrage au rouleau et nullement ou seulement faiblement liées à la surface de la pièce, la structure de gaufrage au rouleau étant de préférence nettoyée à sec pendant le nettoyage, en particulier brossée et/ou soufflée pneumatiquement au moyen de brosses non abrasives relativement douces, et/ou dans lequel une aspiration des résidus de traitement de l'opération de gaufrage au rouleau est effectuée pendant et/ou après l'opération de gaufrage au rouleau, la surface de la pièce étant de préférence dégagée par soufflage en plus de l'aspiration.

4. Procédé de traitement selon l'une des revendications précédentes, **caractérisé en ce que** l'au moins un élément roulant (1380) de l'outil de traitement (1307) est roulé sur la portion à traiter de la surface incurvée (1308) de la pièce sous pression de contact par guidage de l'outil de traitement à une distance prédéfinie de la surface de la pièce le long d'un trajet prédéfini de l'outil de traitement, le tracé du trajet prédéfini de l'outil de traitement dépendant de préférence de l'incurvation de la surface de la pièce et de la pression de contact requise.

5. Procédé de traitement selon l'une des revendications 1 à 4, **caractérisé en ce que**, pour traiter la surface intérieure d'un alésage, en particulier d'un alésage cylindrique, le roulement de l'au moins un élément roulant est effectué à l'aide d'un outil de traitement (100) qui remplit de préférence sensiblement l'alésage, qui est conçu comme un outil rotatif et qui est entraîné en rotation sur l'axe (112) de l'outil.

6. Outil de trainement destiné à traiter une surface incurvée d'une pièce, en particulier à traiter la surface intérieure d'un alésage ménagé dans une pièce lors d'un procédé de traitement selon l'une des revendications précédentes, ledit outil comprenant :
un corps d'outil (110, 310) qui définit un axe d'outil (112, 312), et
au moins un élément roulant (180, 380) qui est porté par le corps d'outil, qui peut tourner sur un axe d'élément roulant (182) et qui comporte une surface extérieure,
**caractérisé en ce que**
la surface extérieure présente, dans au moins une portion de travail cylindrique (190) destinée à venir en contact de roulement avec la surface de la pièce, une structure de surface rugueuse pourvue d'élévations, présentes selon une distribution irrégulière, et de creux plus profonds que les élévations,
l'élément roulant comporte un corps d'élément roulant (184) qui porte dans la portion de travail un revêtement (192) pourvu d'une structure de surface rugueuse, le revêtement (192) comportant un grand nombre de grains en matériau dur (194) liés dans une liaison (196) et la granulométrie moyenne des grains en matériau dur étant dans la gamme allant de 30 µm à 250 µm.

7. Outil de traitement selon la revendication 6, **caractérisé en ce que** l'axe d'élément roulant (1482) d'au moins un élément roulant (1480) s'étend concentriquement à l'axe d'outil (1412) ou **en ce que** l'axe d'élément roulant (182, 1182B, 1182C) d'au moins un élément roulant est situé à l'extérieur de l'axe d'outil (112, 312, 1112).

8. Outil de traitement selon l'une des revendications 6 et 7, **caractérisé en ce que** l'axe d'élément roulant d'au moins un élément roulant est parallèle à l'axe d'outil et/ou **en ce que** l'axe d'élément roulant (1183A) d'au moins un élément roulant (1183) s'étend radialement vers l'extérieur et obliquement par rapport à l'axe d'outil (1112).

9. Outil de traitement selon l'une des revendications 6 à 8, **caractérisé en ce qu'**au moins un élément roulant (1480) comporte une surface extérieure (1404) en forme d'enveloppe cylindrique qui est pourvue d'une structure de surface rugueuse et au moins une surface extérieure conique (1405, 1406) qui est adjacente à cette surface extérieure et qui est pourvue d'une structure de surface rugueuse.

10. Outil de traitement selon l'une des revendications 6 à 9, dans lequel au moins un élément porteur (160, 460, 1161D), mobile par rapport au corps d'outil radialement à l'axe d'outil, est disposé sur le corps d'outil et l'élément roulant est monté sur l'élément porteur, l'élément roulant étant de préférence monté sur l'élément porteur de manière déformable élastiquement.

11. Outil de traitement selon l'une des revendications 6 à 10, **caractérisé par** un système d'avance d'élément roulant destiné à l'avance réglable de manière variable de l'élément roulant dans une direction d'avance s'étendant radialement à l'axe d'outil (112, 312, 1112) .

12. Outil de traitement selon l'une des revendications 6 à 11, dans lequel plusieurs, notamment trois, éléments roulants (180A, 180B, 180C), répartis sur la circonférence, sont disposés sur le corps d'outil (110) et/ou dans lequel plusieurs éléments roulants (1180, 1181, 1182), répartis dans une direction longitudinale de l'outil, sont disposés sur le corps d'outil.

13. Outil de traitement selon l'une des revendications 6 à 12, l'outil de traitement (300) comportant, en plus de plusieurs éléments roulants (380) répartis sur la circonférence de l'outil de traitement, un ensemble de plusieurs autres éléments de traitement qui sont répartis sur la circonférence de l'outil de traitement et qui peuvent avancer radialement indépendamment des éléments roulants, les autres éléments de traitement étant de préférence des barrettes de rodage (390) ou des éléments de lissage.

14. Outil de traitement selon l'une des revendications 6 à 13, dans lequel le corps d'outil comporte une structure d'accouplement destinée à accoupler l'outil de traitement à une broche de travail (150) d'une machine à roder ou dans lequel le corps d'outil comporte une structure d'accouplement destinée à accoupler l'outil de traitement à la broche de travail d'un centre de traitement.

15. Utilisation d'un outil de traitement selon l'une des revendications 6 à 14 dans un procédé de traitement selon l'une des revendications 1 à 5.
